(19) Europäisches Patentamt / European Patent Office / Office européen des brevets

(11) **EP 4 019 935 B1**

(12) **EUROPÄISCHE PATENTSCHRIFT**

(45) Veröffentlichungstag und Bekanntmachung des Hinweises auf die Patenterteilung:
**21.06.2023   Patentblatt 2023/25**

(21) Anmeldenummer: **20216785.4**

(22) Anmeldetag: **23.12.2020**

(51) Internationale Patentklassifikation (IPC):
**G01N 15/08** (2006.01)     **A61L 2/02** (2006.01)
**B01D 65/10** (2006.01)     **B01D 29/11** (2006.01)
**B01D 29/58** (2006.01)

(52) Gemeinsame Patentklassifikation (CPC):
**G01N 15/0826; B01D 29/114; B01D 29/58;
B01D 65/104;** G01N 2015/084

(54) **INTEGRITÄTSTEST FÜR EINE DOPPELFILTERCAPSULE**

INTEGRITY TEST FOR A DOUBLE FILTER CAPSULE

ESSAI D'INTÉGRITÉ POUR UNE CAPSULE À DOUBLE FILTRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.06.2022   Patentblatt 2022/26**

(73) Patentinhaber: **Sartorius Stedim Biotech GmbH
37079 Göttingen (DE)**

(72) Erfinder:
• **FRIESE, Thomas**
  **37079 Göttingen (DE)**
• **STRAUSS, Mario**
  **37079 Göttingen (DE)**
• **MÜLLER, Katrin**
  **37079 Göttingen (DE)**
• **LOEWE, Thomas**
  **37079 Göttingen (DE)**

(74) Vertreter: **Novagraaf International SA
Chemin de l'Echo 3
1213 Onex, Geneva (CH)**

(56) Entgegenhaltungen:
**DE-U1- 20 009 001      US-A1- 2007 079 649
US-A1- 2015 316 462**

**Beschreibung**

Die Erfindung betrifft die Prüfung der Integrität, insbesondere der Dichtigkeit bzw. Zuverlässigkeit des Rückhaltevermögens für herauszufilternde Substanzen einer insbesondere sterilen Doppelfiltercapsule. Die Erfindung findet insbesondere Einsatz im Zusammenhang mit einem "Pre-Use-Post-Sterilization Integrity Tests", also vor der Verwendung einer sterilen Doppelfiltercapsule in Filtrationsprozessen, wobei die Integrität bzw. Dichtheit bzw. Zuverlässigkeit des Rückhaltevermögens für herauszufilternde Substanzen der mit zwei integrierten Filtern innerhalb eines einzigen bzw. kombinierten Gehäuses ausgestatteten Filtercapsule überprüft werden kann, ohne die Sterilität der Filtercapsule oder des Aufbaus, in der die Filtercapsule für die Anwendung integriert ist, zu beeinträchtigen.

In anderen Worten betrifft die Erfindung einen Integritätstest für eine in einem gemeinsamen Gehäuse integrierte Doppelanordnung von zwei Filtern, wobei mindestens ein Filter bevorzugt ein Sterilfilter ist. Dabei kann der Integritätstest beispielsweise einem Bubble-Point-Test, einem Diffusionstest und/oder einem Druckhaltetest entsprechen oder zumindest ähneln bzw. einen oder mehrere solcher Tests umfassen.

In pharmazeutischen Prozessen, beispielsweise bei der Herstellung von Antikörpern oder Medikamenten, wird die Sterilfiltration als ein Standardverfahren angewandt. Für neuartige biotechnologisch hergestellte Wirkstoffe auf Basis komplexer (Bio-)Moleküle ist diese Art der Sterilisierung in vielen Fällen die einzige Möglichkeit der Sterilisation, da andere Verfahren, wie die Erhitzung oder die Bestrahlung mit Gamma-Strahlen die Moleküle beschädigen, denaturieren oder zerstören könnten. Zur Erhöhung der Sicherheit der Sterilisation aber auch zur verbesserten Kontrolle über die Prozessführung ist es zunehmend wünschenswert, zumindest zwei hintereinander geschaltete Filtereinheiten entweder als redundante oder als einander ergänzende Einheiten ein einer Filtrationsanordnung einzusetzen. Im Fall von Single-Use-Ausführungen sind z.B. zwei mittels Schläuchen verbundene Filtercapsulen hintereinander angeordnet. Die US 2007/079649 A1 offenbart einen Integritätstest für eine Doppelfiltercapsule. Die US 2015/316462 A1 offenbart Integritätstests für zwei hintereinander angeordnete Filterelemente.

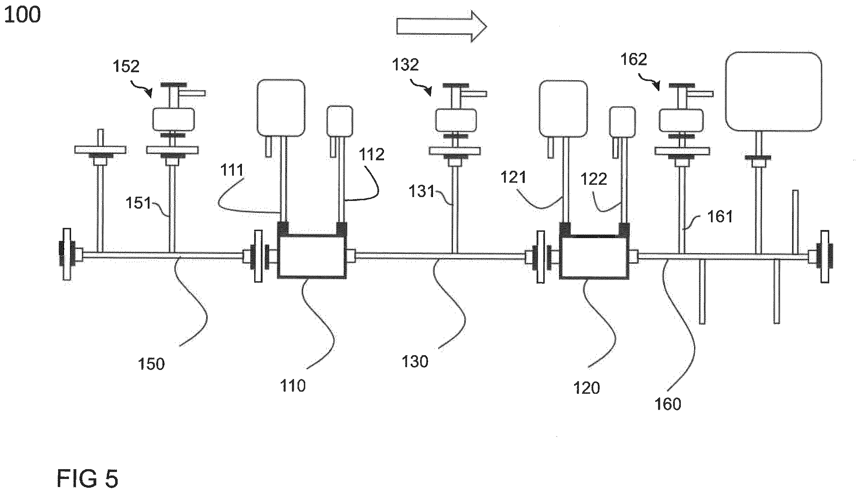

Insbesondere zeigt **Fig. 5** eine beispielhafte Anordnung eines herkömmlichen, komplexen Doppelfiltersystems 100. Ein erster Filter 110 ist über eine Schlauchverbindung 130 mit einem zweiten Filter 120 fluidisch verbunden. Der erste Filter 110 kann über eine Leitung 150 am Eingang mit einem zu filtrierenden Medium beschickt werden. Nach dem Filtern durch den ersten Filter 110 kann das Medium mittels der Schlauchverbindung 130 dem zweiten Filter 120 zugeführt werden und diesen passieren, um dann über eine weitere Leitung 160 hinter dem Ausgang des zweiten Filters 120 insbesondere als steriles Medium abgeführt zu werden. Die allgemeine Betriebsflussrichtung ist mittels eines Pfeils angedeutet. Am ersten Filter 110 und am zweiten Filter 120 können jeweils Zusatzanschlüsse bzw. -leitungen 111, 112 bzw. 121, 122 insbesondere zur Probenahme und/oder als Anschluss für Wastebags vorgesehen sein.

Jeder der beiden Filter 110, 120 kann für sich einzeln auf seine Integrität geprüft werden. Dazu eignet sich im Fall des ersten Filters 110 beispielsweise ein Prüfanschluss 151 vor dem Filter 110. Im Fall des zweiten Filters 120 eignet sich beispielsweise ein Prüfanschluss 131 vor dem Filter 120. Dazu können die Prüfanschlüsse 131, 151 über jeweilige Prüffluidfilter (z.B. Luftfilter) 132, 152 mit einem entsprechenden Testgerät verbunden werden. Ein Testfluid kann entsprechend über die Leitungen 151 bzw. 131 jeweils in den ersten Filter 110 bzw. den zweiten Filter 120 geleitet werden und jeweils über die Leitungen (z.B. 132) hinter dem jeweiligen Filter 110, 120 abgeleitet werden. Auf diese Weise kann die Integrität beispielsweise mittels Diffusionstest und/oder Bubble-Point-Test für jeden der beiden Filter getrennt durchgeführt werden. Allerdings sind diese Integritätstests sehr aufwendig, insbesondere wenn dabei gleichzeitig die Sterilität des gesamten Systems gewahrt bleiben muss. Vor allem die Vielzahl erforderlicher Komponenten für die Tests und deren Verbindungen mit unterschiedlichen Flussrichtungen für das Testfluid machen die Test sehr kritisch für mögliche Kontaminationen.

Es ist daher Aufgabe der Erfindung, die Integrität einer Doppelfilteranordnung möglichst einfach und zuverlässig und bei gleichzeitiger Sicherstellung der Sterilität zu prüfen. Diese Aufgabe wird wie in den unabhängigen Ansprüchen angegeben gelöst.

Bevorzugte Ausführungsformen sind Gegenstand der abhängigen Ansprüche oder ansonsten auch in der folgenden Beschreibung noch dargelegt.

Somit betrifft die Erfindung in einem Aspekt ein Verfahren zum Durchführen eines Integritätstests einer Doppelfiltercapsule. Dieses Verfahren umfasst ein Bereitstellen der Doppelfiltercapsule mit einem Gehäuse, in welchem ein erster Filter, zum ersten Filtern eines Mediums, und ein zweiter Filter, zum zweiten Filtern des Mediums angeordnet sind. Die beiden Filter sind in Flussrichtung des zu filtrierenden Mediums nacheinander derart angeordnet, dass bei einem Filtrationsvorgang das zu filtrierende Medium in dessen Flussrichtung von einem Vorraum im Gehäuse durch den ersten Filter in einen Zwischenraum zwischen dem ersten Filter und dem zweiten Filter und weiter durch den zweiten Filter zu einem im Gehäuse vorgesehen Ausgang fließt bzw. fließen kann, über den das filtrierte Medium die Doppelfiltercapsule verlässt bzw. verlassen kann. Das Gehäuse weist einen (insbesondere verschließbaren) Vorraumzugang zum Zuführen eines Testfluids in den Vorraum und einen (insbesondere verschließbaren) Zwischenraumzugang zum Zuführen des Testfluids in den Zwischenraum auf.

Als erster und/oder zweiter Filter werden insbesondere Membranfilter verwendet. Das heißt der erste bzw.

zweite Filter umfasst vorzugsweise eine erste bzw. zweite Filtermembran. Besonders bevorzugt ist der erste und/oder zweite Filter in der Form einer im Wesentlichen zylinderförmigen Filterkerze ausgebildet. In einer bevorzugten Ausführungsform wird dabei die erste und/oder zweite Filtermembran während der Filtration von dem zu filtrierenden Medium einer Richtung im Wesentlichen radial einwärts durchströmt. Besonders bevorzugt ist die erste und/oder zweite Filtermembran zu einer Plissee-Struktur gefaltet. Insbesondere in einer zylinderförmigen Anordnung der Plissee-Struktur wird eine hohe Filterfläche mit einer vergleichsweise großen Homogenität der Strömung kombiniert, was die effiziente Nutzung der Filtermembran erhöht. Ansonsten kann der erste und/oder zweite Filter alternativ auch als Flachfilter ausgebildet sein.

Außerdem umfasst das Verfahren ein Bereitstellen einer Verbindungsleitung zwischen dem Vorraumzugang und dem Zwischenraumzugang zur (verschließbaren) fluidischen Verbindung des Vorraums mit dem Zwischenraum. Dabei ist zumindest die fluidische Verbindung zum Zwischenraum hin verschließbar ist. Dazu kann entweder der Zwischenraumzugang selbst oder die Verbindungsleitung entsprechend verschließbar sein, also insbesondere ein entsprechendes Ventil umfassen. Bei hergestellter fluidischer Verbindung des Vorraums mit dem Zwischenraum über die Verbindungsleitung wirkt die Verbindungsleitung insbesondere als Bypass zum eigentlichen Fluss durch den ersten Filter. Vorzugsweise wird die Verbindungsleitung aber nur für den Integritätstest, insbesondere in einer später noch beschriebenen zweiten Testphase als Bypass genutzt und zum Zwischenraum hin fluidisch verbunden. Ansonsten, insbesondere während einer Filtration, bleibt die Verbindungsleitung zwar im Prinzip vorhanden (und angeschlossen), die fluidische Verbindung zum Zwischenraum hin wird allerdings unterbrochen.

Das Verfahren umfasst nun ein Bestimmen des Integritätszustandes der Doppelfiltercapsule, insbesondere des ersten Filters und des zweiten Filters sowie gegebenenfalls auch des Gehäuses und/oder etwaiger Abdichtungen zwischen den Filtern und dem Gehäuse, basierend auf zumindest folgenden beiden Testphasen, nämlich eine erste Testphase und eine zweite Testphase. Dabei ist allerdings zu beachten, dass die beiden Testphasen (mit zugehörigen Integritätsprüfungen) nicht notwendigerweise in der Reihenfolge ihrer hier gewählten Bezeichnungen durchgeführt werden müssen. Insbesondere kann die zweite Testphase auch vor der ersten Testphase erfolgen. Als Testfluid wird vorzugsweise ein kompressibles Fluid, also ein Gas verwendet.

So umfasst die erste Testphase ein Zuführen des Testfluides insbesondere über den Vorraumzugang in den Vorraum bei verschlossener (bzw. unterbrochener) fluidischer Verbindung der Verbindungsleitung zum Zwischenraum hin (und vorzugsweise bei geöffnetem Ausgang). In diesem Zustand wird eine erste Integritätsprüfung durchgeführt. Die erste Integritätsprüfung kann insbesondere einen Bubble-Point-Test und/oder einen Diffusionstest und/oder einen Druckhaltetest umfassen. Beispiele der möglichen Integritätsprüfungen werden später noch genauer beschrieben. In jedem Fall ist es gewünscht, in dieser ersten Testphase das Testfluid lediglich über den Vorraumzugang in den Vorraum einzuführen, den Zwischenraum hingegen nicht direkt von außen und nach außen für das Testfluid zugänglich zu machen. Vielmehr wird in dieser ersten Testphase nur ein Durchtritt des Testfluids durch den ersten Filter provoziert und auf dessen Verhalten geprüft. Dabei kann sich das durch den ersten Filter getretene Testfluid nun zumindest teilweise im Zwischenraum ansammeln und/oder weiter über den zweiten Filter zum Ausgang der Doppelfiltercapsule gelangen, wobei auch abhängig von einem Betriebsmodus der ersten Testphase das Ausgang geschlossen sein kann oder offen gehalten werden sollte, um einen Austritt des Testfluids aus dem Gehäuse zu ermöglichen.

So kann die erste Testphase vorzugsweise in zwei verschiedenen Testmodi betrieben werden, welche im Folgenden als "stationärer Modus" und als "dynamischer Modus" bezeichnet werden sollen. Dabei wird im stationären Modus ein Zustand eingestellt, bei welchem kontinuierlich über den Vorraumzugang so viel Testfluid zugeführt wird, wie es durch den ersten Filter und den zweiten Filter hindurchtritt, um über den Ausgang auszutreten. Er wird somit ein Gleichgewicht zwischen dem Fluss durch den ersten Filter in den Zwischenraum und dem Fluss durch den zweiten Filter aus dem Zwischenraum eingestellt. Dabei ist davon auszugehen, dass in diesem Zustand jeweils ein konstanter Druck des Testfluids im Vorraum und im Zwischenraum sowie am Ausgang herrscht. Die (in diesem Modus ebenfalls idealerweise zeitlich konstant bleibenden) Druckdifferenzen zwischen dem Vorraum und dem Zwischenraum einerseits und dem Zwischenraum und dem Ausgang andererseits führen zum jeweiligen Fluss des Testfluids durch den ersten bzw. zweiten Filter. Bei einer gegebenen Sollcharakteristik der Doppelfiltercapsule (bzw. des ersten und zweiten Filters) für die Art der durchgeführten Integritätsprüfung, insbesondere in diesen Testmodus, ist somit ein charakteristisches Verhalten hinsichtlich des Druckes im Vorraum (bzw. einer Druckdifferenz zwischen Vorraum und Ausgang) einerseits und dem erforderlichen Zufluss des Testfluids in den Vorraum zur Aufrechterhaltung des Druckes im Vorraum (bzw. der Druckdifferenz zwischen Vorraum und Ausgang) zu erwarten. Weicht die tatsächliche Charakterisierung von diesem zu erwartenden Verhalten ab, ist davon auszugehen, dass zumindest eine der beiden Filterstufen (also insbesondere einer der beiden Filter selbst oder deren Abdichtung zum Gehäuse hin oder sogar das Gehäuse selbst) nicht intakt ist. Allerdings ist bei diesem Testmodus in der Regel noch nicht unbedingt und unmittelbar feststellbar, welche der beiden Filterstufen möglicherweise beschädigt ist. Rückschluss darauf lässt aber die Kombination mit der zweiten Testphase zu.

Zunächst aber soll noch der in der ersten Testphase in einer bevorzugten Ausführungsform angewandte dynamische Modus beschrieben werden. Gerade in diesem Modus ist es besonders vorteilhaft, als Testfluid ein Testgas zu verwenden, oder zumindest sollte der Zwischenraum während des Tests bzw. vor Testbeginn nicht vollständige mit einem inkompressiblen Testfluid gefüllt sein. Der dynamische Modus basiert auf der Annahme bzw. dem Betriebszustand, wonach eine Auswertung im Rahmen der ersten Integritätsprüfung innerhalb einer so kurzen Zeit (Prüfungszeit) nach einer Zufuhr des Testfluids in den Vorraum bzw. nach einem Druckaufbau des Testfluids im Vorraum erfolgt, dass diese Zeit (Prüfungszeit) wesentlich kürzer ist als das Verhältnis des (kompressiblen) Volumens im Zwischenraum und eines Sollwerts der Flussrate des Testfluids durch den ersten Filter. "Wesentlich" kürzer soll hier insbesondere so verstanden werden, dass die Prüfungszeit nicht länger etwa 20%, vorzugsweise nicht länger als etwa 10%, noch mehr bevorzugt nicht länger als etwa 5%, am meisten bevorzugt nicht länger als etwa 2% des Quotienten aus dem (kompressiblen) Volumens im Zwischenraum und dem Sollwert der Flussrate des Testfluids durch den ersten Filter ist. Soweit die Flussrate vom Druck im Vorraum bzw. von der Druckdifferenz zwischen Vorraum und Zwischenraum abhängt, wird vorzugsweise auch die Prüfungszeit in Abhängigkeit vom gewählten Prüfungsdruck bzw. der gewählten Druckdifferenz eingehalten.

Dadurch ändert sich während der Prüfungszeit weitgehend unabhängig vom Zustand des zweiten Filters der Druck im Zwischenraum im wesentlich nicht. Damit lässt sich in diesem Modus insbesondere aus dem Druck im Vorraum (bzw. einer Druckdifferenz zwischen dem Vorraum und dem Zwischenraum) und/oder aus dem Fluss des Testfluids in den Vorraum der Integritätszustand der ersten Filterstufe (also insbesondere des ersten Filters bzw. dessen Abdichtung zum Gehäuse hin) ermitteln. Der dynamische Modus basiert also auf einer Prüfung in einem Nichtgleichgewichtszustand des Systems. Er wird aber vorzugsweise aus einem bekannten Gleichgewichtszustand heraus gestartet. Mit anderen Worten wird vorzugsweise zunächst ein Gleichgewichtszustand der Drücke und Flüsse in der Doppelfiltercapsule eingestellt, bevor der Druckaufbau im Vorraum für die erste Integritätsprüfung startet. Als solcher Gleichgewichtszustand kommt insbesondere ein Zustand mit gleichen Drücken im Vorraum, im Zwischenraum und am Ausgang in Frage, so dass in diesem Zustand im Wesentlichen noch kein Fluss durch die Filter auftritt.

Die zweite Testphase umfasst ein gleichzeitiges Zuführen des Testfluides in den Vorraum (insbesondere über den Vorraumzugang) und über den Zwischenraumzugang in den Zwischenraum (insbesondere bei geöffnetem Ausgang). Dabei ist der Vorraum mit dem Zwischenraum über die Verbindungsleitung fluidisch so verbunden, dass zwischen dem Vorraum und dem Zwischenraum ein Druckausgleich stattfinden kann. In diesem Zustand wird eine zweite Integritätsprüfung durchgeführt. Die zweite Integritätsprüfung kann insbesondere einen Bubble-Point-Test und/oder einen Diffusionstest und/oder einen Druckhaltetest umfassen. Vorzugsweise umfasst die zweite Integritätsprüfung denselben Test bzw. dieselben Tests wie die erste Integritätsprüfung.

Die in der zweiten Testphase (als Bypass) eingesetzte Verbindungsleitung zwischen dem Vorraum und dem Zwischenraum kann insbesondere auch während der ersten Testphase vorhanden sein/bleiben, wobei in diesem Fall lediglich die fluidische Verbindung zum Zwischenraum hin unterbrochen wird. Mit anderen Worten kann der gesamte Aufbau hinsichtlich der verbundenen Leitungen während des Integritätstests und sogar während einer anschließenden (oder auch vorausgehenden) Filtration bestehen bleiben. Insbesondere ist eine Trennung einzelner Leitungen während des Integritätstest oder zwischen dem Integritätstest und dem Filtrationsvorgang und ein erneutes, verändertes Verbinden nicht erforderlich. Damit kann die Sterilität des gesamten Systems besondere zuverlässig gewahrt bleiben.

Das erfindungsgemäße Verfahren ermöglicht damit, zwei Filter in einer Kombination in einem Gehäuse auf ihre jeweilige Integrität in zwei im Wesentlichen unabhängigen Messungen so zu prüfen, dass einerseits eine zuverlässige Aussage über die Integrität jeder der beiden Filter für sich aber auch der gesamten Filterkombination abgeleitet werden kann, während andererseits nur ein minimaler Eingriff in die für den reinen Filtrationsvorgang vorgesehenen und nötigen Anschlusskonstellationen nötig ist, um den Integritätstest durchführen zu können. Insbesondere kommt der erfindungsgemäße Integritätstest mit wenigen zusätzlichen Anschlüssen und Leitungen aus, die speziell für den Integritätstest vorgesehen sein müssen und nötige Umschaltvorgänge, also Veränderungen der Verbindungen während des Test beschränken sich auf ein Minimum. Damit wird sehr wirkungsvoll unterbunden, dass beispielsweise durch (evtl. versehentlich) veränderte Flussrichtungen innerhalb der Testleitungen Kontaminationen in das Filtersystem eingebracht oder innerhalb des Filtersystems übertragen werden. Vor allem kann der Integritätstest mit nur einer Testfluidquelle (insbesondere einem Integritätstestgerät) durchgeführt werden, ohne dass zwischen den Testphasen Verbindungen gelöst und (verändert) wieder verbunden werden müssen und ohne dass eine Vielzahl von Ventilen vorgesehen sein muss, die während des Tests oder unmittelbar davor und/oder danach betätigt werden müssten. Insbesondere ist auch zwischen dem Integritätstest und dem eigentlichen Filtrationsvorgang kein aufwendiger Umbau erforderlich. Damit lässt sich das erfindungsgemäße Verfahren sehr effizient sowohl unmittelbar vor einem Filtrationsvorgang als auch unmittelbar nach einem Filtrationsvorgang anwenden. Damit kann die Doppelfiltercapsule zusammen mit den erfindungsgemäßen Testverfahren sehr einfach und sicher vor einer eigentlichen Filtration und/oder nach der (Werksseitigen) Sterilisation, also im Pre-Use-Post-Sterilization Zustand, aber auch (insbesondere unmittelbar) nach einer Filtration zur Integritätsprüfung eingesetzt werden, um zu validieren, ob ein Filtrat aufgrund eines defekten Filters nicht steril ist.

Das Verfahren kann insbesondere angewandt werden mit einer Doppelfiltercapsule, in der beide Filter integral ausgebildet sind. Dabei sind beide Filter der Doppelfiltercapsule innerhalb eines gemeinsamen Gehäuses verbaut und insbesondere miteinander fest verbunden und/oder verschweißt. Alternativ können Bestandteile der Doppelfiltercapsule beispielsweise die einzelnen Filter miteinander verschraubbar und/oder verklemmbar sein, sodass beide Elemente entsprechend durch Verschrauben und/oder Verklemmen miteinander verbunden werden können. Insbesondere kann aber durch eine integrale Bauweise vermieden werden, dass das Filtersystem beim Zusammenbau mit Verunreinigungen kontaminiert wird. Eine einmal auf Integrität geprüfte Doppelfiltercapsule kann also mit einer hohen Zuverlässigkeit zum Einsatz beim Filtern kommen.

Zumindest für die meisten in diesem Zusammenhang bevorzugten Tests, insbesondere bei Verwendung eines Testgases als Testfluid, ist es zumindest bevorzugt, mittelbar oder unmittelbar vor dem Bestimmen des Integritätszustandes der Doppelfiltercapsule ein Benetzen des ersten Filters und/oder des zweiten Filters mit einem Benetzungsmedium durchzuführen. Als Benetzungsmedium kann insbesondere eine Flüssigkeit (z.B. ein Lösungsmittel) dienen, welche auch in dem zu filtrierenden Medium enthalten ist. Besonders bevorzugt wird für hydrophile Filtermaterialien (z.B. Membranen) beispielsweise Wasser oder eine wässrige Lösung und für hydrophobe Filtermaterialien (z.B. Membranen) ein Alkohol oder ein Alkohol/Wasser-Gemisch verwendet.

Wie bereits erwähnt, können in den einzelnen Testphasen unterschiedliche Arten von Integritätsprüfungen durchgeführt werden. So kann die erste und/oder die zweite Integritätsprüfung insbesondere einen Bubble-Point-Test und/oder einen Diffusionstest und/oder einen Druckhaltetest umfassen.

Im Folgenden soll ein Bubble-Point-Test, wie er insbesondere im Rahmen der ersten und/oder zweiten Integritätsprüfung durchgeführt werden kann, näher beschrieben werden. Insbesondere stellt er eine bevorzugte, nicht destruktive Methode der im Rahmen der Erfindung durchgeführten Integritätsprüfung dar. Bei diesem Test wird der zu testende Filter zunächst mit einer Benetzungsflüssigkeit benetzt. Der Bubble-Point-Test wird insbesondere mit einem Testgas als Testfluid durchgeführt, wobei durch das Zuführen von Testgas in den Vorraum ein Druckabfall über den ersten und/oder zweiten Filter aufgebaut wird. Insbesondere wird dabei im Falle der ersten Testphase im dynamischen Modus im Wesentlichen ein Druckabfall am ersten Filter, im Falle der ersten Testphase im stationären Modus im Wesentlichen jeweils ein Druckabfall am ersten und am zweiten Filter und im Falle der zweiten Testphase im Wesentlichen ein Druckabfall am zweiten Filter aufgebaut.

Bei ausreichend geringem Druckabfall am jeweiligen Filter wird das Benetzungsmedium insbesondere durch Oberflächenspannung und Kapillarkräfte derart in den Poren des entsprechenden Filters festgehalten, dass dadurch eine Barriere für das Testgas entsteht, welche im Wesentlichen nicht oder zumindest nicht sichtbar merklich durch den entsprechenden Filter dringen kann. Ein Mindestdruckabfall über dem Filter, der erforderlich ist, um das flüssige Benetzungsmedium durch die Filterporen zu drücken, ist ein Maß für den Porendurchmesser gemäß

$$\Delta P = \frac{4\sigma \cdot \cos\theta}{D} \qquad\qquad \text{(Gleichung 1)}$$

Dabei entspricht $\Delta P$ dem Blasendruck (Bubble-Point), also dem Druckabfall über einen Filter, ab dem das Benetzungsmedium, welches eine Oberflächenspannung $\sigma$ aufweist (z.B. Wasser etwa 72,75 mN/m; 2-Propanol etwa 21,7 mN/m), mittels des Testgases durch Poren mit einem Porendurchmesser D gedrückt wird, und das Testgas insbesondere unter sichtbarer Blasenbildung durch den Filter dringt. $\theta$ bezeichnet dabei den Benetzungswinkel der eingesetzten Kombination aus Benetzungsmedium und Membranmaterial (z.B. CTA: 50° - 55°; PAN: 52° - 58°; PESU: 65° - 70°, jeweils für Wasser als Benetzungsmedium).

Vorzugsweise wird die erste und/oder zweite Integritätsprüfung auf Basis des Bubble-Point-Tests derart durchgeführt, dass ein Blasendruck für den zu testenden Filter ermittelt wird und dieser mit einem entsprechenden (insbesondere vom Hersteller vorgegebenen) Sollwert für den Blasendruck verglichen wird. Dazu wird vorzugsweise der Druckabfall am ersten bzw. zweiten Filter auf beispielsweise etwa 80% des vorgegebenen Sollwerts eingestellt und dann unter Beobachtung kontinuierlich erhöht bis die Blasenbildung einsetzt. Liegt der gemessenen Blasendruck (insbesondere um mehr als eine zugelassene Toleranz) unterhalb des Sollwerts, kann daraus auf einen Defekt des entsprechenden Filters, insbesondere der Filtermembran, geschlossen werden.

Da unterhalb des Blasendrucks kaum Testgas durch den ersten Filter dringt, wird die erste Testphase im Rahmen des Bubble-Point-Tests vorzugsweise in dem oben bereits beschriebenen dynamischen Modus durchgeführt. Einerseits ist es dabei nicht erforderlich, die Einstellung eines stationären Zustands abzuwarten. Vielmehr erfolgt ein möglicher Druckanstieg im Zwischenraum ohnehin nur so langsam, dass ausreichend Zeit bleibt, um nach Anhebung des Drucks im Vorraum die einsetzende Blasenbildung am ersten Filter zu beobachten bevor sich der Druck im Zwischenraum merklich erhöht. Andererseits ist damit eine unabhängige Prüfung der beiden Filter unmittelbar möglich, d.h. allein als dem Ergebnis der ersten Testphase lässt sich eine Aussage über die Integrität des ersten Filters treffen.

In einer anderen bevorzugten Ausführungsform umfasst die erste und/oder zweite Integritätsprüfung einen Diffusionstest. Auch dieser Test stellt eine bevorzugte, nicht destruktive Methode der im Rahmen der Erfindung durchgeführten Integritätsprüfung dar. Dieser Test basiert auf dem Prinzip, dass bei einem Differenzdruck (Druckabfall über einem Filter) insbesondere unterhalb des Blasendrucks Gasmoleküle eines Testgases (z.B. Luft, Stickstoff, Argon, Edelgas und/oder sonstiges Inertgas) entsprechend dem Fick'schen Gesetz durch den mit dem Benetzungsmedium benetzten Filter diffundieren. Die Diffusions(fluss)rate des Gases durch einen Filter hängt insbesondere etwa proportional vom Differenzdruck und von der (wirksamen) Filterfläche des Filters ab. In anderen Worten erfolgt beim Diffusionstest eine Messung des transmembranen, diffusiven Gasflusses (1. Fick'sches Gesetz) durch ein benetztes Filtermaterial, z.B. eine Membran. Die Messung der Gasdiffusion kann auf verschiedene Weise erfolgen. Wie die direkte Messung des Gasvolumens auf der Reinseite (Filtratseite) oder der auf der Anströmseite (Retentatseite) nachzuliefernden Gasmenge, um den Testdruck aufrecht zu erhalten, oder durch Bestimmen des Druckanstiegs auf der Reinseite oder des Druckabfalls nach Abstellen der Druckgas- bzw. Druckfluidquelle auf der Anströmseite (Druckhaltetest). Der Druckhaltetest stellt in anderen Worten eine besondere Form des Diffusionstests dar. Bei dem Druckhaltetest kommt in der Regel ein sehr genaues Manometer zum Einsatz, um insbesondere anströmseitige Druckänderungen aufgrund der Gasdiffusion durch den Filter zu erfassen. Da im Wesentlichen keine Notwendigkeit besteht, den Gasfluss auf der Reinseite des Filters zu bestimmen, wird das Risiko einer Kontamination der Sterilseite des Filters vermieden.

Vorzugsweise wird die erste und/oder zweite Integritätsprüfung auf Basis des Diffusionstests derart durchgeführt, dass ein (insbesondere vom Hersteller vorgegebenen) Sollwert für den Blasendruck des zu testenden Filters vorgegeben wird. Dann wird vorzugsweise der Druckabfall am ersten bzw. zweiten Filter auf beispielsweise auf einen Wert im Bereich von etwa 60% bis etwa 90% des vorgegebenen Sollwerts des Blasendrucks eingestellt. Insbesondere nach einer Stabilisierungszeit zur Stabilisierung der Diffusionsrate wird der Gasfluss bzw. die Diffusionsrate gemessen, beispielsweise über einen Messzeitraum im Bereich von etwa 5 s bis etwa 120 s, bevorzugt etwa 10 s bis etwa eine Minute, beispielsweise etwa 20 s. Dies kann beispielsweise mittels eines Durchflussmessers erfolgen. Liegt der gemessene Gasfluss bzw. die gemessene Diffusionsrate außerhalb (insbesondere oberhalb) einer (insbesondere vom Hersteller) vorgegebenen Spezifikation, kann daraus auf einen Defekt des entsprechenden Filters, insbesondere der Filtermembran, geschlossen werden.

In einer bevorzugten Ausführungsform umfasst das Gehäuse neben dem Vorraumzugang zum Zuführen eines Testfluids in den Vorraum, dem Zwischenraumzugang zum Zuführen des Testfluids in den Zwischenraum und dem Ausgang auch einen Eingang zum Zuführen des zu filtrierenden Mediums in den Vorraum für den Filtrationsvorgang. Mit anderen Worten weist das Gehäuse in diesem Fall insbesondere zwei getrennte Zugänge bzw. Anschlüsse zum Vorraum für das Zuführen des zu filtrierenden Mediums einerseits und das Zuführen des Testfluids andererseits auf.

Alternativ wäre es auch möglich, im Gehäuse der Doppelfiltercapsule nur einen einzigen Vorraumzugang vorzusehen, über den sowohl das Testfluid als auch das zu filtrierende Medium dem Vorraum zugeführt werden - in der Regel allerdings nicht gleichzeitig sondern selektiv. Hierzu können entsprechende Leitungen für das zu filtrierenden Medium und das Testfluid außerhalb des Gehäuses zusammengeführt werden und die einzelnen Zufuhrleitungen getrennt voneinander verschlossen werden.

Ein Verschluss des verschließbaren Vorraum- und/oder Zwischenraumzugangs und/oder des (vorzugsweise verschließbaren) Eingang zum Zuführen des zu filtrierenden Mediums in den Vorraum kann ausdrücklich auch durch ein klemmbares Element und/oder ein Klemmelement und/oder ein Quetschventil gebildet werden. Ein solches klemmbares Element, beispielsweise ein Schlauch oder der Abschnitt eines Schlauchs kann insbesondere durch eine Abklemmung zumindest teilweise so verformt werden, dass der Durchfluss bzw. Strom eines Mediums durch dieses klemmbare Element vermindert oder gar verhindert wird. Dies kann beispielsweise stufenweise regulierbar erfolgen. Alternativ kann das Abklemmen so erfolgen, dass der Durchfluss entweder im Wesentlichen vollständig verhindert oder im Wesentlichen vollständig zugelassen wird. Ein von außen kontrollierbares klemmbares Element erlaubt, den Zufluss und/oder die Strömung durch ein Leitungselement, wie z.B. einen Schlauch, zu kontrollieren, ohne so den Innenraum einzugreifen, das darin befindliche Medium gegebenenfalls kontaminiert wird.

Vorzugsweise weist die Membran des ersten Filters eine Porengröße auf, die größer ist als eine Porengröße der Membran des zweiten Filters. Ein erster Filter mit einer etwas gröberen Porengröße ist dazu ausgelegt, größere Schwebstoffe, wie Lipidagglomerate oder andere Partikel aus dem Medium herauszufiltern und damit den zweiten Filter, der insbesondere Zellen herausfiltern soll, zu entlasten. Derart kann verhindert werden, dass einer der Filter vorzeitig verblockt oder sich im Zwischenraum zu viele Schwebstoffe ansammeln.

Bevorzugt weist die Porengröße des ersten Filters einen Wert im Bereich von etwa 0,3 $\mu$m bis etwa 0,6 $\mu$m auf. Alternativ oder zusätzlich weist die Porengröße des zweiten Filters vorzugsweise einen Wert im Bereich von etwa 0,1 $\mu$m bis etwa 0,3 $\mu$m, insbesondere im Bereich von etwa 0,1 $\mu$m bis etwa 0,2 $\mu$m auf. Bevorzugt ist mindestens der zweite Filter ein Sterilfilter, welcher dazu ausgelegt ist, das Medium so zu filtern, dass möglichst alle Schwebstoffe, die größer als etwa 0,1 $\mu$m bis etwa 0,2 $\mu$m sind, herausgefiltert werden, insbesondere Zellen, Bakterien, Hefen, Pilzsporen, Keime und/oder Viren. Insbesondere ist der erste Filter dazu ausgelegt, als Vorfilter so zu wirken, dass grobe Partikel bzw. Schwebstoffe davon abgehalten werden, den zweiten Filter, der bevorzugt ein Sterilfilter ist, zu erreichen und diesen zu "verblocken" bzw. zu verstopfen. Das System der Doppelfiltercapsule ist bevorzugt so ausgelegt, dass der Sterilfilter ausschließlich Bakterien bzw. Einzeller und/oder Viren aus dem Medium herausfiltern kann.

Alternativ entspricht die Porengröße des ersten Filters etwa der Porengröße des zweiten Filters. Wenn die Poren beider Filter etwa gleich groß sind, kann der zweite Filter als redundanter Filter dienen, für den Fall, dass der erste Filter bei dem Betrieb beschädigt wird. Redundante Sterilfiltration bedeutet, dass aus Sicht der Validierung ein einziger Filter für die Sterilisationsfiltration ausreicht. Ein beispielsweise zusätzlicher zweiter Sterilfilter, insbesondere

ein 0,2-μm-Filter (als "Sekundärfilter", manchmal aber auch als "Polizeifilter" oder "redundanter Filter" bezeichnet) wird aus Sicherheitsgründen verwendet, und der Filter, der dem Füllpunkt am nächsten liegt, ist der erste Filter (Primärfilter). Insbesondere bei identischen oder mindestens ähnlichen Porengrößen des ersten und zweiten Filters weist die Porengröße der Membranen des ersten Filters und des zweiten Filters vorzugsweise einen Wert im Bereich von etwa 0,05 μm bis etwa 0,4 μm, insbesondere im Bereich von etwa 0,1 μm bis etwa 0,2 μm auf.

Für den Fall, dass der erste Filter den Integritätstest nach der Verwendung nicht besteht, wird der zweite Filter (Sekundärfilter) getestet und sofern dieser den Integritätstest besteht muss das gefilterte Medium nicht unbedingt verworfen werden, da der Filterprozess im Wesentlichen über den Sekundärfilter erfolgt ist. In einem solchen Szenario sollten beide Filter auf der Grundlage der EU-GMP-Anforderung für PUPSIT (Pre-Use-Post-Sterilization Integrity Test) vor der Verwendung und nach der Sterilisation getestet werden. Andernfalls könnte der Sekundärfilter nach der Verwendung möglicherweise nicht als gültiger Sterilisationsfilter betrachtet werden. Nach der Filtration mittels einer solchen Doppelfiltercapsule reicht es zunächst aus, den Primärfilter zu testen. Nur wenn der Primärfilter den Integritätstest nach der Verwendung nicht besteht, sollte entsprechend auch der Sekundärfilter auch nach der Verwendung getestet werden.

Bevorzugt ist mindestens ein Filter in der Form einer im Wesentlichen zylinderförmigen Filterkerze ausgebildet. Eine solche zylinderförmige Filterkerze mit einer Höhe, die insbesondere größer ist als der Durchmesser der zylinderförmigen Kerze, hat den Vorteil, dass eine besonders große Fläche für die Plissee-Struktur geschaffen wird, sodass möglichst effektiv, insbesondere eine möglichst große Menge eines Mediums gefiltert werden kann. Eine Filtermembran in einer Plissee-Struktur ist dabei im Wesentlichen in der Form eines Zylinders innerhalb der Filterkerze angeordnet. Die Höhe der zylinderförmigen Filterkerze kann als Zylinderhöhe bezeichnet werden.

Eine Filterkerze stellt somit einen bevorzugten Filter dar. Dabei sind beispielsweise ein Kern (durchbrochenes Innenrohr) und ein den Kern konzentrisch umgreifendes Außenrohr (Rückstausicherung) derart vorgesehen, dass zwischen dem Kern und dem Außenrohr (Hülle) ein Ringspalt gebildet ist, in welchem eine vorzugsweise in Falten plissierte Filtermembran angeordnet ist, deren Falten sich von ihren jeweiligen, am Außenrohr anliegenden Faltenkanten in Richtung auf das Innenrohr zu ihrer jeweiligen Faltenspitze hin erstrecken bzw. entlang des Umfangs des Ringspaltes angeordnet sind. Der Kern stellt insbesondere einen Teil des Gehäuses einer Filterkerze dar und dient dabei als Stütze.

Alternativ kann der Filter auch lediglich ein im Wesentlichen flaches Filterelement, beispielsweise einen Flachfilter oder ein Blättchen mit Poren aufweisen, das zwischen zwei Räumen über einer Öffnung angeordnet ist. In diesem Fall, liegt allerdings eine vergleichsweise geringe Filterfläche vor.

Gemäß einem weiteren Aspekt betriff die Erfindung ein System zum Durchführen eines Integritätstests umfassend:

- eine Doppelfiltercapsule mit einem Gehäuse, in welchem ein erster Filter und ein zweiter Filter in Flussrichtung eines zu filtrierenden Mediums nacheinander derart angeordnet sind, dass bei einem Filtrationsvorgang das zu filtrierende Medium in dessen Flussrichtung von einem Vorraum im Gehäuse durch den ersten Filter in einen Zwischenraum zwischen dem ersten Filter und dem zweiten Filter und weiter durch den zweiten Filter zu einem Ausgang fließt, wobei das Gehäuse einen Vorraumzugang zum Zuführen eines Testfluids in den Vorraum und einen Zwischenraumzugang zum Zuführen des Testfluids in den Zwischenraum aufweist;
- eine Verbindungsleitung zwischen dem Vorraumzugang und dem Zwischenraumzugang zur fluidischen Verbindung zwischen dem Vorraum und dem Zwischenraum, wobei zumindest die fluidische Verbindung zum Zwischenraum hin verschließbar ist; und
- ein Integritätsprüfgerät, welche ausgelegt ist, die folgenden beiden Testphasen auszuführen und basieren darauf einen Integritätszustandes der Doppelfiltercapsule zu bestimmen:

  -- eine erste Testphase, umfassend: Zuführen des Testfluides in den Vorraum bei verschlossener fluidischer Verbindung der Verbindungsleitung zum Zwischenraum hin und Durchführen einer ersten Integritätsprüfung; und

  -- eine zweite Testphase, umfassend: gleichzeitiges Zuführen des Testfluides in den Vorraum und über den Zwischenraumzugang in den Zwischenraum, wobei der Vorraum mit dem Zwischenraum über die Verbindungsleitung fluidisch so verbunden ist, dass zwischen dem Vorraum und dem Zwischenraum ein Druckausgleich stattfindet, und Durchführen einer zweiten Integritätsprüfung.

Dabei das Integritätsprüfgerät insbesondere dazu ausgelegt ist, mindestens die erste Testphase und/oder die zweite Testphase zumindest teilweise automatisiert auszuführen. Insbesondere können Ventile automatisiert angesteuert werden, also automatisiert bzw. per Rechner gesteuert geöffnet und/oder geschlossen werden und insbesondere kann automatisiert ein Druck angelegt und angepasst werden. Darüber hinaus kann bevorzugt automatisiert eine Diffusionsrate bestimmt und/oder ein Bubble-Point-Test durchgeführt und der dazugehörige Bubble-Point ermittelt werden. Beispielsweise kann auch ein Druck langsam an einem Eingang derart erhöht und dabei bestimmt werden bis zu dem Zeitpunkt, an dem die angelegte Druckluft über einen oder beide Filter tritt und ein vorbestimmter Diffusionswert erreicht wird. Ein solcher Druck kann dann dem Bubble-Point entsprechen. Bevorzugt kann der Innenraum der Doppelfiltercapsule zumindest teilweise mittels des Integritätsprüfgeräts, insbesondere via Vorraum- und/oder Zwischenraumzugang be- und/oder entlüftet werden.

Bevorzugt umfasst das System mindestens einen Testfluidfilter, der vorzugsweise als Sterilfilter zum Filtern des Testfluids ausgebildet ist, bevor das Testfluid, über den Vorraumzugang bzw. den Zwischenraumzugang in den Vorraum bzw. Zwischenraum gelangt. Je nach Anwendungsgebiet ist es notwendig oder wünschenswert, dass das Druckfluid, also beispielsweise Druckluft, steril ist, bevor es in die Doppelfiltercapsule eingeleitet wird. Ein Sterilfilter zum Filtern des Druckfluides kann verhindern, dass mit dem Druckfluid Verunreinigungen in den Innenraum der Doppelfiltercapsule, insbesondere zwischen die beiden Filter gelangen. Somit kann auch während der Prüfung auf Integrität gewährleistet werden, dass die sterilen Bedingungen innerhalb der Doppelfiltercapsule eingehalten werden.

Gemäß einem weiteren Aspekt umfasst ein Computerprogrammprodukt Befehle, die bei der Ausführung des Programms durch eine Recheneinheit, insbesondere ein Integritätsprüfgerät diese bzw. dieses veranlassen, das Verfahren bzw. die Schritte des genannten Verfahrens zumindest teilweise auszuführen.

Im Folgenden werden Ausführungsformen und Beispiele anhand von Zeichnungen erläutert. Merkmale, die darin beschrieben werden, können als optional und/oder kombinierbar mit anderen Merkmalen erachtet werden, sofern sie sich nicht ausschließen.

| | |
|---|---|
| **Fig. 1** | ist eine schematische Querschnittsansicht eines beispielhaften Aufbaus zur Integritätsprüfung einer Doppelfiltercapsule; |
| **Fig. 2A** | ist eine schematische Darstellung des Aufbaus aus Fig. 1 zur Veranschaulichung einer beispielhaften ersten Testphase in einem dynamischen Modus; |
| **Fig. 2B** | ist eine schematische Darstellung des Aufbaus aus Fig. 1 zur Veranschaulichung einer beispielhaften ersten Testphase in einem stationären Modus; |
| **Fig. 3** | ist eine schematische Darstellung des Aufbaus aus Fig. 1 zur Veranschaulichung einer beispielhaften zweiten Testphase; |
| **Fig. 4A-E** | zeigt schematisch verschiedene Zustände während eines Ablaufs eines Filtrationsvorgangs (inklusive der Vorbereitungen und Durchführung eines Integritätstests) zur Veranschaulichung der möglichen Einbeziehung eines Integritätstest; |
| **Fig. 5** | zeigt eine beispielhafte Anordnung zur Integritätsprüfung eines herkömmlichen Doppelfiltersystems. |

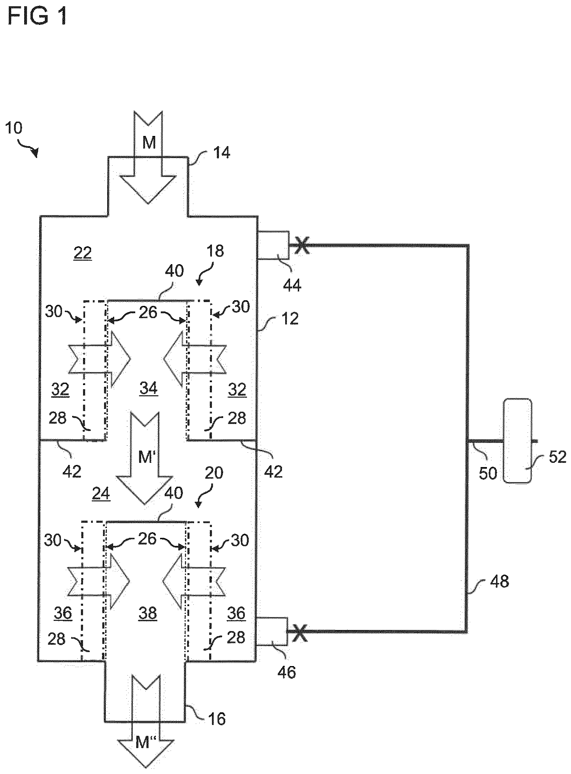

**Fig. 1** zeigt eine beispielhafte schematische Querschnittsansicht einer Doppelfiltercapsule 10. Die Doppelfiltercapsule 10 umfasst ein vorzugsweise im Wesentlichen zylinderförmiges Gehäuse 12, in welchem in dieser Variante ein Eingang 14 zum Zuführen eines zu filtrierenden Mediums M sowie ein Ausgang 16 vorgesehen sind, über welchen ein filtriertes Medium M" (also das Medium M nach erfolgter Filtration) abgeführt werden kann. Innerhalb des Gehäuses 12 sind in Flussrichtig des Mediums vom Eingang 14 zum Ausgang 16 nacheinander ein erster Filter 18 und ein zweiter Filter 20 angeordnet.

Innerhalb des Gehäuses 12 trennt der erste Filter 18 einen Vorraum 22 (fluidisch) von einem Zwischenraum 24. Der Zwischenraum 24 wiederum ist durch den zweiten Filter 20 (fluidisch) vom Ausgang 16 getrennt (in dem Sinne, dass jedenfalls im regulären Filterbetrieb bei intakter Filterkapsel jeglicher Fluidfluss zwischen dem Zwischenraum 24 und dem Ausgang 16 über/durch den Filter 20 hindurchtreten muss und damit gefiltert wird). Während eines Filtrationsvorgangs tritt somit das zu filtrierende Medium M über den Eingang 14 in den Vorraum. In einem ersten von zwei in Flussrichtung sequentiellen Filterschritten tritt das zu filtrierende Medium M vom Vorraum 22 durch den ersten Filter 18 in den Zwischenraum 24 und wird damit zumindest vorfiltriert oder teilfiltriert. Das zumindest teilweise filtrierte Medium M' tritt dann durch den zweiten Filter 20 vom Zwischenraum 24 zum Ausgang 16 und verlässt dort als filtriertes Medium M" das Gehäuse 12.

In der dargestellten Variante sind der erste Filter 18 und der zweite Filter 20 jeweils als Filterkerze ausgebildet. Soweit solche Filterkerzen dem Grunde nach im Wesentlichen analog aufgebaut sind, wird in der folgenden Beschreibung nicht zwischen dem ersten und dem zweiten Filter unterschieden, auch wenn diese sich insbesondere abhängig von der konkreten Anwendung beispielsweise bezüglicher ihrer Porengröße durchaus unterscheiden können und gegebenenfalls auch sollen.

Eine Filterkerze umfasst dabei vorzugsweise einen Kern 26, insbesondere als zylinderförmige Stützstruktur, die eine Vielzahl vorzugsweise rasterartig angeordneter Löcher aufweist und/oder als Gitterstruktur gebildet ist. Beispielsweise kann der Kern 26 als ein durchbrochenes bzw. perforiertes zylindrisches Rohr und/oder ein zylindrisches Gitter gebildet sein. Insbesondere ist der Kern 26 damit für Fluide, insbesondere das Medium M und eine später noch beschriebenes Testfluid, im Wesentlichen ohne merklichen Strömungswiderstand durchströmbar.

Um diese Stützstruktur (Kern 26) herum ist eine vorzugsweise Plissee-artig gefaltete Filterstruktur 28 angeordnet. Die Filterstruktur 28 umfasst vorzugsweise zumindest eine Filtermembran und besonders bevorzugt zumindest eine Vlies-Schicht, an oder in der die Filtermembran angeordnet ist. In einer bevorzugten Ausführungsform ist die Filtermembran zwischen zwei Vlies-Schichten eingebettet. Weiter bevorzugt kann auch eine Schichtfolge mit mehreren Filtermembranen vorgesehen sein, die jeweils zwischen Vlies-Schichten eingebettet sind.

Vorzugsweise umfasst die Filterkerze außerdem ein äußeres Rohr 30, welches die Filterstruktur 28 und den Kern 26 umgibt und insbesondere als Rückstausicherung 30 eine mögliche Beschädigung der Filterstruktur 28 im Falle eines rückwärts gerichteten Druckaufbaus (also gegen die eigentliche Flussrichtung) in der Filterkerze dient. Der Kern 26 und/oder die Rückstausicherung 30 sind insbesondere aus einem Kunststoff gebildet, welcher sich dazu eignet, sterilisiert zu werden. Beispielsweise eignet sich Polypropylen und/oder Polytetrafluorethylen und/oder ein anderes Polymer als Baustoff zumindest für Teile der Doppelfiltercapsule wie den Kern 26 und/oder die Rückstausicherung 30. Alternativ oder zusätzlich kann insbesondere der Kern 26 und/oder die Rückstausicherung 30 und/oder das Gehäuse auch Metall umfassen.

In einer Doppelfiltercapsule, wie sie im Rahmen der vorliegenden Erfindung vorzugsweise eingesetzt wird, mit Filterkerzen der beschriebenen Art als erster Filter 18 und/oder zweiter Filter 20 verläuft die reguläre Flussrichtung während einer Filtration durch die Filterkerze(n) vorzugsweise im Wesentlichen radial einwärts, wie dies in Fig. 1 dargestellt ist. Der Vorraum 22 erstreckt sich somit vorzugsweise auch in einem Bereich radial außerhalb der ersten Filterkerze (erster Außenraum 32). Der Zwischenraum 24 wiederum erstreckt sich sowohl in einem Bereich radial innerhalb der ersten Filterkerze (erster Innenraum 34) als auch in einem Bereich radial außerhalb der zweiten Filterkerze (zweiter Außenraum 36). Ein Bereich radial innerhalb der zweiten Filterkerze (zweiter Innenraum 32) ist dann direkt mit dem Ausgang 16 verbunden. Um den ersten Innenraum 34 gegen die Vorraum 22 abzudichten bzw. um den zweiten Innenraum 38 gegen den Zwischenraum 24 abzudichten, weisen die beiden Filterkerzen jeweils eine Basiskappe 40 als Abschlusswand auf. Um den ersten Außenraum 32 gegen den Zwischenraum 24 abzudichten ist eine Zwischenwand 42 vorgesehen, welche die erste Filterkerze mit einer Außenwand des Gehäuses 12 verbindet. Grundsätzlich ist es bei dem in Fig. 1 dargestellten Aufbau möglich, die gesamte Filtercapsule derart modular aufzubauen, dass damit nicht nur zwei, sondern auch drei und mehr Filter in der dargestellten Weise hintereinander angeordnet werden.

Wie in Fig. 1 außerdem dargestellt umfasst die Doppelfiltercapsule 10 einen Vorraumzugang 44 und einen Zwischenraumzugang 46, über welche der Vorraum 22 und der Zwischenraum 24 mittels einer Verbindungsleitung 48 fluidisch verbindbar bzw. verbunden sind. Der Vorraumzugang 44 und der Zwischenraumzugang 46 dienen dabei dem Zuführen eines Testfluids, insbesondere eines Testgases in den Vorraum 22 bzw. den Zwischenraum 24. Vorzugsweise ist die fluidische Verbindung der Verbindungsleitung 48 sowohl zum Vorraum 22 als auch zum Zwischenraum 24 hin wahlweise verschließbar - und zwar ohne die mechanische Verbindung der Verbindungsleitung 48 über den Vorraumzugang 44 zum Vorraum 22 bzw. über den Zwischenraumzugang 46 zum Zwischenraum 24 hin zu trennen, also ohne dass der einmal geschlossene Fluidkanal entlang der Verbindungleitung und den Zugängen zum Inneren des Gehäuses 12 hin geöffnet wird. Somit kann wahlweise der Fluidstrom unterbrochen bzw. gesteuert werden, ohne dass eine Sterilität des Systems gefährdet wird.

Dies kann insbesondere durch ein jeweiliges Ventil (Vorraumzugangsventil bzw. Zwischenraumventil) realisiert werden. Als solche Ventile kommen vor allem klemmbare Schlauchelemente bzw. Klemmelement bzw. Quetschventile in Frage. Dazu kann insbesondere die Verbindungsleitung 48 selbst als klemmbare oder quetschbare Schlauchverbindung ausgebildet sein oder zumindest klemm-/quetschbare Schlauchabschnitte zum Vorraumzugang 44 bzw. zum Zwischenraumzugang 46 hin umfassen. Vorzugsweise sind während eines Filtrationsvorgangs die fluidischen Verbindung der Verbindungsleitung 48 sowohl zum Vorraum 22 als auch zum Zwischenraum 24 hin verschlossen. Dies ist in Fig. 1 durch das "X" dargestellt.

Um das Testfluid für die Integritätsprüfung(en) der Doppelfiltercapsule 10 zuzuführen, weist vorzugsweise die Verbindungsleitung 48 einen Anschluss zu einer Testgerätleitung 50 auf, in welcher ein Testfluidfilter 52 (insbesondere als Sterilfilter) vorgesehen ist und welche zu einem nicht explizit dargestellten Integritätsprüfgerät führt. Über diese Fluidverbindung kann sowohl das Testfluid wahlweise dem Vorraum 22 und/oder dem Zwischenraum 24 zugeführt werden. Insbesondere kann hierüber vorzugsweise auch der Testfluiddruck und/oder eine Testfluidflussrate gemessen und/oder eingestellt werden. Als Integritätsprüfgerät kann beispielsweise das Gerät Sartocheck® 5 von Sartorius eingesetzt werden.

Bevor der Integritätszustand der Doppelfiltercapsule 10 bestimmt wird, wird vorzugsweise dafür gesorgt, dass die beiden Filter benetzt sind. Entweder ist dies bereits dadurch gewährleistet, dass vor dem Bestimmen des Integritätszustands bereits ein Filtrationsvorgang stattgefunden hat. Ansonsten wird vorzugsweise analog zum Filtrationsvorgang insbesondere ebenfalls über den Eingang 14 in der in Fig. 1 dargestellten Weise eine Benetzungsflüssigkeit eingefügt, um die Filterstrukturen zu benetzen.

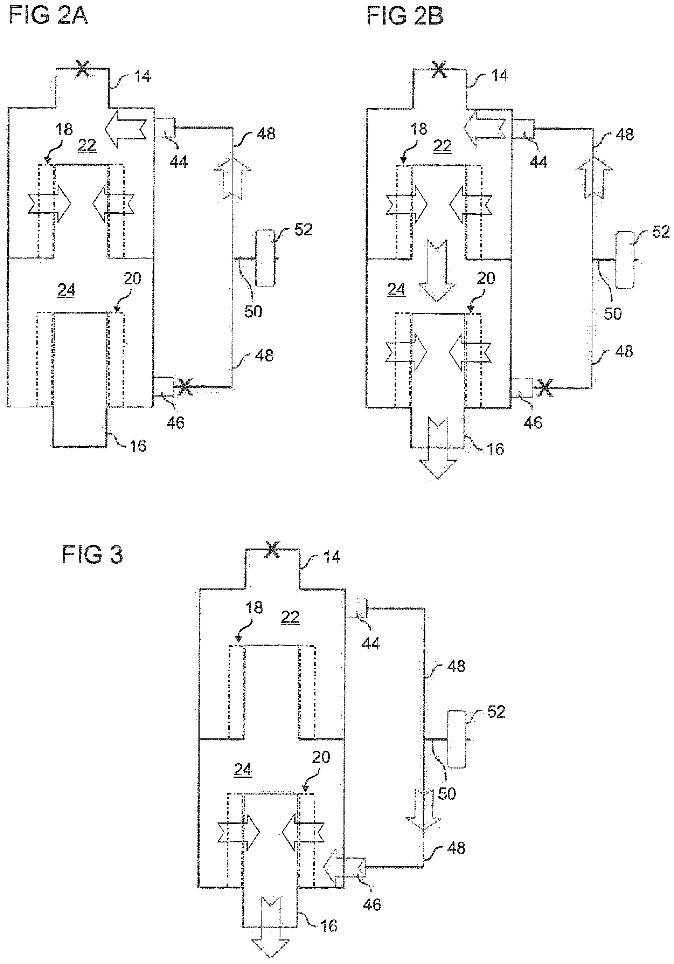

Ein beispielhaftes Bestimmen des Integritätszustandes der Doppelfiltercapsule 10 basierend auf zumindest zwei Testphasen wird nachfolgend mit Bezug auf die Figuren 2A, 2B und 3 beschrieben. Dabei veranschaulichen Fig. 2A und Fig. 2B insbesondere eine erste Testphase, wobei in Fig. 2A eine erste Integritätsprüfung in einem dynamischen Modus und in Fig. 2B eine erste Integritätsprüfung in einem stationären Modus dargestellt sind. Fig. 3 schließlich veranschulicht eine zweite Testphase.

So wird in der in **Fig. 2A** veranschulichten, bevorzugten ersten Testphase neben dem Eingang 14 zumindest die fluidische Verbindung der Verbindungsleitung 48 zum Zwischenraum 24 hin verschlossen. Dies ist in Fig. 2A durch das "X" im Bereich des Zwischenraumzugangs 46 dargestellt. Nun wird mittels der zum Vorraum 22 hin fluidisch verbundenen Verbindungsleitung 48 über den Vorraumzugang 44 ein Testgas in den Vorraum 22 zugeführt. Dadurch wird ein Druckunterschied zwischen dem Vorraum 22 und dem Zwischenraum 24 aufgebaut, der dazu führt, dass das Testgas teilweise den ersten Filter 18 durchdringt. Der Gasfluss ist durch Pfeile dargestellt. Auf diese Weise wird eine erste Integritätsprüfung durchgeführt, beispielsweise in Form eines Bubble-Point-Tests und/oder eines Diffusionstests und/oder eines Druckhaltetest. Dabei wird je nach Testverfahren der Druck im Vorraum 22 gemessen und/oder geregelt und/oder ein Gasfluss des Testgases in den Vorraum 22 gemessen und/oder geregelt. Aus den jeweiligen Mess- bzw. Regelgrößen lässt sich insbesondere in der bereits beschriebenen, testspezifischen Weise auf die Integrität des ersten Filters 18 rückschließen. Insbesondere wird in der in Fig. 2A dargestellten Ausführungsform dieser Test in einem dynamischen Modus durchgeführt. Dabei wird die Integritätsprüfung so kurz bzw. schnell durchgeführt, dass sich während dessen der Druck im Zwischenraum 24 aufgrund des Gasflusses durch den ersten Filter 18 kaum ändert.

Eine alternative Variante, in der die erste Testphase in einem stationären Modus durchgeführt wird, ist schematisch in Fig. 2B dargestellt. Während es im dynamischen Modus in der Regel nicht entscheidend ist, ob während der ersten Integritätsprüfung der Ausgang 16 geöffnet oder geschlossen ist, sollte im stationären Modus der Ausgang 16 geöffnet sein. Insbesondere ist es im stationären Modus das Ziel, einen durchgängigen Gasfluss von der Verbindungsleitung 48 über den Vorraumzugang 44 in den Vorraum 22, durch den ersten Filter 18, in den Zwischenraum 24 und durch den zweiten Filter 20 zum Ausgang 16 einzustellen. In dieser stationären fluidischen Reihenschaltung sind die Druckabfälle über die beiden Filter ein direktes Maß für deren fluidische Widerstände und es kann aus den Messungen des Gesamtdrucks- und/oder Flusses ein Rückschluss auf die Reihenschaltung der beiden Filter vorgenommen werden, insbesondere ob sie den vorgegebenen Spezifikationen hinsichtlich Blasendruck, Diffusions- und/oder Druckhaltewerten entsprechen. Je nach Testverfahren wird dabei in der Regel aber nur eine Aussage über die Kombination der beiden Filter möglich. Eine Abweichung von der Spezifikation lässt noch nicht unbedingt einen Schluss zu, welcher der beiden Filter den Spezifikationen nicht oder weniger entspricht. Eine solche Aussage lässt sich aber zumindest in Kombination mit der zweiten Testphase konkretisieren.

**Fig. 3** schließlich veranschaulicht eine beispielhafte Implementierung einer zweiten Testphase. In dieser Testphase sind der Vorraum 22 und der Zwischenraum 24 über die Verbindungsleitung 48 derart verbunden, dass das zugeführte Testgas mit im Wesentlichen gleichem Druck sowohl in den Vorraum 22 als auch in den Zwischenraum 24 einströmt. Die Verbindungsleitung 48 bewirkt damit einen Druckausgleich zwischen dem Vorraum 22 und dem Zwischenraum 24. Unabhängig von der Art der durchgeführten Integritätsprüfung und insbesondere unabhängig von einem über den zweiten Filter 20 angelegten Testdruck wird dabei einerseits sichergestellt, dass der erste Filter 18 nicht durch einen inversen Druck geschädigt wird. Andererseits wird sichergestellt, dass ein in den Zwischenraum 24 eingebrachtes Testgas nicht durch den ersten Filter 18 (als rückwärts) abdiffundiert, sondern lediglich durch den zweiten Filter 20 zum Ausgang 16 hin fließen kann. Der entsprechende Gasfluss des Testgases in dieser zweiten Testphase ist in Fig. 3 durch Pfeile veranschaulicht. Damit wird sichergestellt, dass jegliche für die zweite Integritätsprüfung gemessen oder gesteuerten Werte von Druck und/oder Gasfluss lediglich die Charakteristik des zweiten Filters 20 repräsentieren. Selbst eine starke Abweichung des ersten Filters 18 von den geforderten Spezifikationen würde die Auswertung des zweiten Filters 20 im Rahmen der zweiten Testphase nicht verfälschen.

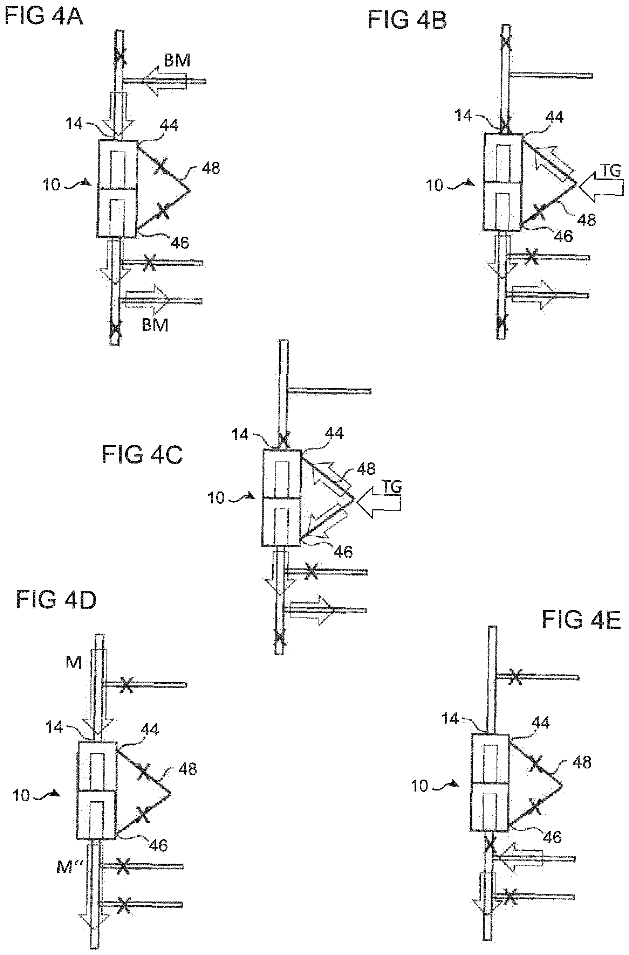

Figuren 4A bis 4E zeigen eine beispielhafte Sequenz von Verfahrensschritten zur Veranschaulichung, wie ein Integritätstest in einen Filtrationsprozess eingebettet werden kann. Die Pfeile deuten die Flussrichtungen jeweiliger Fluide und die Markierungen "X" repräsentieren entsprechend geschlossene Ventile bzw. Leitungen.

So veranschaulicht **Fig. 4A** einen Benetzungsschritt zum Benetzen der Filterstrukturen in der Doppelfiltercapsule mittels eines Benetzungsmediums BM. In diesem Benetzungsschritt sind die fluidischen Verbindungen über den Vorraumzugang und den Zwischenraumzugang vorzugsweise verschlossen. Ferner ist ein Zufluss für das zu filtrierende Medium verzugsweise verschlossen. Das Benetzungsmedium BM fließt durch beide Filter und wird nach dem Verlassen der Doppelfiltercapsule über den Ausgang vorzugsweise mittels eines gesonderten Abflusses abgeführt. Das Benetzungsmedium kann dadurch separat entsorgt werden.

**Fig. 4B** zeigt schematisch einen Zustand in einer anschließenden ersten Testphase wie sie beispielsweise bereits mit Bezug auf Fig. 2A (oder Fig. 2B) beschreiben wurde. Dabei sind insbesondere der Eingang und der Zwischenraumzugang verschlossen, während der Vorraumzugang geöffnet ist. Über den Vorraumzugang wird Testgas in den Vorraum eingeleitet und die erste Integritätsprüfung durchgeführt.

**Fig. 4C** zeigt schematisch einen Zustand in einer zweiten Testphase wie sie beispielsweise bereits mit Bezug auf Fig. 3 beschreiben wurde. Auch wenn diese zweite Testphase hier nach der ersten Testphase dargestellt ist, können die beiden Testphasen auch in umgekehrter Reihenfolge durchgeführt werden. Dabei ist insbesondere der Eingang verschlossen, während anders als in der ersten Testphase sowohl der Vorraumzugang als auch der Zwischenraumzugang geöffnet sind. Auch der Ausgang ist in diesem Fall geöffnet. Dabei wird sowohl in den Vorraum als auch in den Zwischenraum Testgas eingeführt. Aufgrund des übereinstimmenden Drucks im Vorraum und im Zwischenraum entsteht kein Nettofluss des Testgases durch den ersten Filter. Jeder beobachtete Gasfluss des Testgases ist auf einen Fluss durch den zweiten Filter zurückzuführen.

Bestehen beide Filter den Integritätstest, kann die Doppelfiltercapsule zur Filtration genutzt werden, wie dies schematisch in **Fig. 4D** dargestellt ist. Dabei fließt das zu filtrierende Medium M durch über den Eingang in die Doppelfiltercapsule durch beide Filter und verlässt den Ausgang als filtriertes Medium M". Vorzugsweise wird das zu filtrierende Medium über einen gesonderten Zugang zugeführt. Der Zugang, der zuvor für das Zuführen des Benetzungsmediums geöffnet war, ist in diesem Fall vorzugsweise verschlossen. Auch der gesonderte Abfluss für das Benetzungsmedium ist geschlossen. Dafür ist ein Abfluss für das gefilterte Medium geöffnet. Der Vorraumzugang und der Zwischenraumzugang sind vorzugsweise ebenfalls geschlossen.

Nach Abschluss des Filtrationsvorgangs wird, wie in **Fig. 4E** dargestellt, vorzugsweise die Restflüssigkeit aus den Leitungen gedrückt. Durch Öffnen eines weiteren Zugangs hinter dem Ausgang der Doppelfiltercapsule und Schließen des Ausgangs kann beispielsweise durch Einleiten von Druckluft das Rohrsystem hinter dem Ausgang entleert werden. Alternativ oder zusätzlich zum Integritätstest vor dem Filtrationsvorgang ist es auch möglich, einen Integritätstest nach dem Filtrationsvorgang durchzuführen.

Das Integritätsprüfgerät kann insbesondere dazu ausgelegt sein, alle oder einzelne Schritte des Verfahrens zumindest teilweise automatisiert anzusteuern, zu kontrollieren oder auszuführen. Insbesondere können beispielsweise Ventile, Pumpen, Bypass- und/oder Leitungsöffnungen und Verschlüsse, Gas- und/oder Flüssigkeitsdruck, Temperaturelemente, Anzeigen und/oder Warnleuchten bzw. Warnsignale von dem Integritätsprüfgerät gesteuert werden.

Die im Folgenden aufgeführten beispielhaften proof-of-principle Messungen zeigen, dass der erfindungsgemäße Integritätstest einer Doppelfiltercapsule identische Ergebnisse liefert wie ein Integritätstest zweier identischer aber voneinander isolierter Filter. Die proof-of-principle Messungen basieren auf dem erfindungsgemäßen Verfahren, um dessen Ausführbarkeit und Zuverlässigkeit zu belegen. Insbesondere basieren diese proof-of-principle Messungen auf Diffusionstests und Bubble-Point-Tests. Dabei werden Filter verglichen, die in einer Doppelfiltercapsule vorliegen und zu diesen Filtern identische Filter, die isoliert getestet werden. Es handelt sich also in anderen Worten um Ergebnisse von Filterkerzen die nicht verbaut sind in einer Doppelfiltercapsule und um dieselben Filterkerzen, die in einer Doppelfiltercapsule vorliegen und die mittels des erfindungsgemäßen Integritätstests getestet wurden. Beispielhaft werden Kombinationen verschiedener Modelle von Filtern beschrieben, anhand deren die Ausführbarkeit und Wirksamkeit des erfindungsgemäßen Integrationstest demonstriert werden soll. In einem Filtergehäuse der folgenden Beispiele werden stets zwei Filterkerzen, welche "in Reihe verschaltet" sind, verbaut.

Gängige Modelle von Filtern werden getestet, wobei die Modelle mit "BH1" und "BH9" bezeichnet werden. Die Bezeichnungen beziehen sich auf die sogenannte Bauhöhe, also im Wesentlichen die Zylinderlänge der Filterkerze. Die aufgebauten Testelemente der Filterkerzen können beispielsweise über die Kombination der Filtergrößen BH9/BH9 oder BH1/BH1 verfügen. Eine charakteristische Größe für das Filtermodell mit der Bezeichnung BH9 ist die Filterfläche von etwa 0,18 m$^2$. Eine charakteristische Größe für das Filtermodell mit der Bezeichnung BH1 ist die Filterfläche von etwa 0,55 m$^2$. Des Weiteren werden die Bezeichnungen durchgehend verwendet, um damit auf die charakteristische Filterfläche Bezug zu nehmen.

Beispielhaft getestete Aufbauten können beispielsweise folgende Modelle in einer Doppelfiltercapsule sein:

| Erster Filter | Zweiter Filter |
|---|---|
| Sartopore 2, 0,2 μm BH9 | + Sartopore 2, 0,2 μm BH9 |
| Sartopore 2, 0,2 μm BH1 | + Sartopore 2, 0,2 μm BH1 |

Der Begriff "Sartopore" bezeichnet dabei einen beispielhaften Filtertyp, während die Angabe "0,2 μm" die Porengröße der Membran bezeichnet. Sowohl die Diffusionsrate als auch der Blasendruck (Bubble-Point) hängen von verschiedenen Parametern ab, wie der Temperatur, die in der Regel bei Messungen der Raumtemperatur entspricht und dem im Integritätstest verwendeten Lösemittel. Die Diffusion hängt außerdem von der Bauhöhe der Filterkerze und damit der Filterfläche ab.

A) Erster Testaufbau:

Folgende Grenzwerte liegen vor: für Sartopore 2, Porengröße 0,2 μm, Prüfdruck 2,5 bar:

| BH9 | Diffusionsrate: | < 7 ml/min |
|---|---|---|
| | Bubble-Point: | > 3,2 bar |
| BH1 | Diffusionsrate: | < 18 ml/min |
| | Bubble-Point: | > 3,2 bar |

Erstes Beispiel einer Doppelfiltercapsule:

Es werden zwei Filter mit einer jeweiligen Filterfläche von etwa 0,18 m$^2$ auf deren Integrität geprüft.

Erster Filter: Sartopore 2, Porengröße 0,2 $\mu$m, BH9;
Zweiter Filter: Sartopore 2, Porengröße 0,2 $\mu$m, BH9.

Es werden in diesem Proof-Of-Principle Test also zwei identische Filter in einem Gehäuse verbaut und deren Integritätstest mit zwei Integritätstest der jeweiligen einzelnen identischen Filter verglichen, um die Ausführbarkeit und Wirksamkeit des erfindungsgemäßen Integritätstests zu demonstrieren.

| | Anordnung | Gemessene Difussionsrate | Bubble-Point |
|---|---|---|---|
| Erster Filter | Doppelfiltercapsule | 2,9 ml/min | |
| Erster Filter | Einzelfilter | 3,6 ml/min | 3, 99 bar |
| Zweiter Filter | Doppelfiltercapsule | 3,8 ml/min | 4,19 bar |
| Zweiter Filter | Einzelfilter | 4,1 ml/min | 4,08 bar |

Von den Einzelfiltern war bekannt, dass sie integer waren zum Zeitpunkt der Messung. Für die Diffusionsrate des Diffusionstests ergeben sich im Rahmen der Messgenauigkeit vergleichbare Werte, jeweils sowohl für den ersten als auch für den zweiten Filter als Einzelfilter und in der Doppelfiltercapsule. Für den Bubble-Point des Bubble-Point-Tests wurde zwar der erste Filter in der Doppelfiltercapsule nicht getestet, jedoch zeigen die Werte für den zweiten Filter in Einzelfilter-Anordnung und in der Doppelfiltercapsule vergleichbare Werte. Alle gemessenen Diffusionswerte liegen unterhalb des oben genannten oberen Grenzwertes und alle gemessenen Bubble-Point-Werte liegen oberhalb des oben genannten unteren Grenzwertes. Demzufolge zeigt diese Proof-Of-Principle Messung, dass beide Filter der Doppelfiltercapsule genauso zuverlässig mittels des erfindungsgemäßen Verfahrens auf ihre Integrität geprüft werden können wie in der Einzelanordnung.

Zweites Beispiel einer Doppelfiltercapsule:

Es werden zwei Filter mit einer jeweiligen Filterfläche von etwa 0,55 m$^2$ auf deren Integrität geprüft.

Erster Filter: Sartopore 2, Porengröße 0,2 $\mu$m, BH1;
Zweiter Filter: Sartopore 2, Porengröße 0,2 $\mu$m, BH1.

Wiederum werden in diesem Proof-Of-Principle Test zwei identische Filter in einem Gehäuse verbaut, die verglichen mit dem ersten Beispiel jedoch eine andere Filterfläche aufweisen.

| | Anordnung | Gemessene Difussionsrate | Bubble-Point |
|---|---|---|---|
| Erster Filter | Doppelfiltercapsule | 9,6 ml/min | 4,13 bar |
| Erster Filter | Einzelfilter | 10,5 ml/min | 3, 93 bar |
| Zweiter Filter | Doppelfiltercapsule | 10,2 ml/min | 4,08 bar |
| Zweiter Filter | Einzelfilter | 10,4 ml/min | 3,88 bar |

Auch das zweite Beispiel belegt anhand vergleichbarer Werte für Diffusion und Bubble-Point, dass das erfindungsgemäße Verfahren mit derselben Zuverlässigkeit zwei in einem Gehäuse verbaute Filter einer Doppelfiltercapsule prüfen kann wie ein Prüfverfahren eines Einzelfilters. In diesem Beispiel wurde zusätzlich auch der Bubble-Point des ersten Filters in der Doppelfiltercapsule erfasst. Schwankungen in den Werten können auf Unterschiede in der Benetzung der Plisseestrukturen zurückgeführt werden.

Eine weitere Ausführungsform besteht in einem Integritätstest für eine in ein Gehäuse integrierte Anordnung eines Vorfilters (z.B. Sartopore 2, Porengröße 0,45 $\mu$m) gefolgt von einem Sterilfilter (Sartopore 2, Porengröße 0,2 $\mu$m).

B) Zweiter Testaufbau:

| | Erster Filter | Zweiter Filter |

Erster Filter                         Zweiter Filter
Sartopore 2, 0,45 $\mu$m BH9   + Sartopore 2, 0,2 $\mu$m BH9 (Doppelfiltercapsule)
Sartopore 2, 0,45 $\mu$m BH1   + Sartopore 2, 0,2 $\mu$m BH1 (Doppelfiltercapsule)

Die beiden Doppelfiltercapsulen unterscheiden sich im Wesentlichen in ihrer Bauhöhe. Es werden demzufolge zwei Doppelfiltercapsulen mit unterschiedlichen Filterflächen aber gleichen Kombinationen von Porengrößen auf deren Integrität geprüft. Für jede Doppelfiltercapsule werden in diesem Proof-Of-Principle Test zwei nicht identische Filter in einem Gehäuse verbaut, die zueinander eine unterschiedliche Porengröße aufweisen und deren Integritätstest wird mit zwei Integritätstests der jeweiligen einzelnen identischen Filter verglichen.

Folgende Grenzwerte liegen vor: für Sartopore 2, Porengröße 0,45 $\mu$m, Prüfdruck 1,7 bar:

| BH9 | Diffusionsrate: | < 6 ml/min |
|-----|-----------------|------------|
|     | Bubble-Point:   | > 2,2 bar  |
| BH1 | Diffusionsrate: | < 12 ml/min |
|     | Bubble-Point:   | > 2,2 bar  |

Erstes Beispiel einer Doppelfiltercapsule:

Erster Filter: Sartopore 2, Porengröße 0,45 $\mu$m, BH9;
Zweiter Filter: Sartopore 2, Porengröße 0,2 $\mu$m, BH9.

| | Anordnung | Gemessene Difussionsrate | Bubble-Point |
|--------------|---------------------|-------------|----------|
| Erster Filter | Doppelfiltercapsule | 2,3 ml/min |          |
| Erster Filter | Einzelfilter        | 2,2 ml/min | 2,83 bar |
| Zweiter Filter | Doppelfiltercapsule | 4,3 ml/min |          |
| Zweiter Filter | Einzelfilter        | 4,0 ml/min | 4,09 bar |

Zweites Beispiel einer Doppelfiltercapsule:

Erster Filter: Sartopore 2, Porengröße 0,45 $\mu$m, BH9;

Zweiter Filter: Sartopore 2, Porengröße 0,2 $\mu$m, BH9.

| | Anordnung | Gemessene Difussionsrate | Bubble-Point |
|--------------|---------------------|-------------|----------|
| Erster Filter | Doppelfiltercapsule | 2,5 ml/min | 2,95 bar |
| Erster Filter | Einzelfilter        | 1,6 ml/min | 2,83 bar |
| Zweiter Filter | Doppelfiltercapsule | 5,9 ml/min | 4,28 bar |
| Zweiter Filter | Einzelfilter        | 3,8 ml/min | 3,73 bar |

In beiden Beispielen unterscheiden sich die jeweiligen beiden Filter im Wesentlichen in ihrer Porengröße. Es werden in diesen beiden Proof-Of-Principle Tests demzufolge zwei nicht identische Filter gleicher Zylinderlänge (Bauhöhe) in einem Gehäuse verbaut, die eine unterschiedliche Porengröße jeweils zueinander aufweisen. Die Integritätstests der Doppelfiltercapsulen werden mit zwei Integritätstest der jeweiligen einzelnen identischen Filter verglichen. Es werden in beiden Beispielen zwei Filter mit einer jeweiligen Filterfläche von etwa 0,18 m² auf deren Integrität geprüft.

Anhand der relativ ähnlichen Ergebnisse der Diffusionstests für die Doppelfiltercapsulen und die Einzelfilter kann auch in diesen beiden Beispielen gezeigt werden, dass der erfindungsgemäße Integritätstest der Doppelfiltercapsule genauso zuverlässig funktioniert wie der Integritätstest der Einzelfilter. Alle Werte liegen im zulässigen Bereich eingegrenzt durch die oben angegebenen Grenzwerte.

Sowohl die Messdaten des Diffusionstests als auch die des Bubble-Point-Tests belegen, dass auch im vorliegenden Beispiel der erfindungsgemäße Integritätstest der Doppelfiltercapsule mit dem Integritätstest der Einzelfilter vergleichbar ist. Alle Werte liegen im zulässigen Bereich eingegrenzt durch die obigen Grenzwerte. Wie oben bereits erwähnt sind Abweichungen auf Unterschiede in der Benetzung zurückzuführen, die sich nicht vermeiden lassen.

Drittes Beispiel einer Doppelfiltercapsule:

Erster Filter: Sartopore 2, Porengröße 0,45 µm, BH1;
Zweiter Filter: Sartopore 2, Porengröße 0,2 µm, BH1.

Die beiden Filter unterscheiden sich im Wesentlichen ebenfalls in ihrer Porengröße. Es werden in diesem Proof-Of-Principle Test demzufolge zwei nicht identische Filter in einem Gehäuse verbaut, die zueinander eine unterschiedliche Porengröße aufweisen und deren Integritätstest mit zwei Integritätstests der jeweiligen einzelnen identischen Filter verglichen. Es werden hier zwei Filter mit einer jeweiligen Filterfläche von etwa 0,55 m² auf deren Integrität geprüft.

| | Anordnung | Gemessene Difussionsrate | Bubble-Point |
|---|---|---|---|
| Erster Filter | Doppelfiltercapsule | 7,1 ml/min | |
| Erster Filter | Einzelfilter | 6,9 ml/min | 2,78 bar |
| Zweiter Filter | Doppelfiltercapsule | 10,3 ml/min | 4,08 bar |
| Zweiter Filter | Einzelfilter | 11,8 ml/min | 3,99 bar |

Auch im dritten Beispiel ergibt sich, dass sowohl die Messdaten des Diffusionstests als auch die des Bubble-Point-Tests für den zweiten Filter belegen, dass der erfindungsgemäße Integritätstest der Doppelfiltercapsule mit dem Integritätstest der Einzelfilter vergleichbar ist.

Die genannten Beispiele belegen die Umsetzbarkeit und Wirksamkeit des erfindungsgemäßen Verfahrens und die Vergleichbarkeit deren Zuverlässigkeit eines Integritätstests mit dem jeweiligen Integritätstest eines Einzelfilters.

C) Dritter Testaufbau

Im Folgenden wird ein Fall betrachtet, in dem ein Filter absichtlich zerstört wurde, um zu demonstrieren, dass auch die nicht-Integrität eines Filters in einer Doppelfiltercapsule 10 genauso zuverlässig festgestellt werden kann wie in Einzelfilteranordnung.

Erstes Beispiel einer Doppelfiltercapsule:

Erster Filter: Sartopore 2, Porengröße 0,2 µm, BH9;
Zweiter Filter: Sartopore 2, Porengröße 0,2 µm, BH9.

Im zweiten Filter lag ein Grobdefekt vor.

| | Anordnung | Gemessene Difussionsrate | Bubble-Point |
|---|---|---|---|
| Erster Filter | Doppelfiltercapsule | 3,2 ml/min | 3,93 bar |

(fortgesetzt)

| | Anordnung | Gemessene Difussionsrate | Bubble-Point |
|---|---|---|---|
| Erster Filter | Einzelfilter | 3,0 ml/min | 3,58 bar |
| Zweiter Filter | Doppelfiltercapsule | Testabbruch | Testabbruch |
| Zweiter Filter | Einzelfilter | Testabbruch | Testabbruch |

Während für den ersten Filter, sowohl in Einzelfilteranordnung als auch in der Doppelfiltercapsule festgestellt wurde, dass dieser integer ist, brach das Integritätsmessgerät den Test für den zweiten nicht integren Filter automatisch ab, und zwar sowohl in Einzelfilteranordnung als auch in der Doppelfiltercapsule. Dieses Beispiel soll demonstrieren, dass der erfindungsgemäße Integritätstest auch zuverlässig die nicht-Integrität eines defekten Filters in einer Doppelfiltercapsule, sowohl mittels Diffusionstest als auch mittels Bubble-Point-Test feststellen kann.

Somit wurde in verschiedenen Beispielen die Ausführbarkeit und Wirksamkeit des erfindungsgemäßen Integritätstests demonstriert.

**Bezugszeichenliste**

10   Doppelfiltercapsule
12   Gehäuse
14   Eingang
16   Ausgang
18   erster Filter
20   zweiter Filter
22   Vorraum
24   Zwischenraum
26   Kern
28   Filterstruktur
30   Rückstausicherung
32   Außenraum des ersten Filters
34   Innenraum des ersten Filters
36   Außenraum des zweiten Filters
38   Innenraum des zweiten Filters
40   Abschlusswand, Basiskappe
42   Zwischenwand
44   Vorraumzugang
46   Zwischenraumzugang
48   Verbindungsleitung
50   Testgerätleitung
52   Testfluidfilter
M    zu filtrierendes Medium
M'   teilfiltriertes Medium
M"   filtriertes Medium
BM   Benetzungsmedium
TG   Testgas

**Patentansprüche**

**1.** Verfahren zum Durchführen eines Integritätstests einer Doppelfiltercapsule (10), umfassend:

- Bereitstellen der Doppelfiltercapsule (10) mit einem Gehäuse (12), in welchem ein erster Filter (18) und ein zweiter Filter (20) in Flussrichtung eines zu filtrierenden Mediums (M) nacheinander derart angeordnet sind, dass bei einem Filtrationsvorgang das zu filtrierende Medium (M) in dessen Flussrichtung von einem Vorraum (22) im Gehäuse (12) durch den ersten Filter (18) in einen Zwischenraum (24) zwischen dem ersten Filter (18) und dem zweiten Filter (20) und weiter durch den zweiten Filter (20) zu einem Ausgang (16) fließt, wobei das Gehäuse (12) einen Vorraumzugang (44) zum Zuführen eines Testfluids (TG) in den Vorraum (22) und einen Zwischenraumzugang (46) zum Zuführen des Testfluids (TG) in den Zwischenraum (24) aufweist;

- Bereitstellen einer Verbindungsleitung (48) zwischen dem Vorraumzugang (44) und dem Zwischenraumzugang (46) zur fluidischen Verbindung zwischen dem Vorraum (22) und dem Zwischenraum (24), wobei zumindest die fluidische Verbindung zum Zwischenraum (24) hin verschließbar ist;

- Bestimmen des Integritätszustandes der Doppelfiltercapsule (10) basierend auf zumindest folgenden beiden Testphasen:

-- einer ersten Testphase, umfassend: Zuführen des Testfluides (TG) in den Vorraum (22) bei verschlossener fluidischer Verbindung der Verbindungsleitung (48) zum Zwischenraum (24) hin und Durchführen einer ersten Integritätsprüfung; und

-- einer zweiten Testphase, umfassend: gleichzeitiges Zuführen des Testfluides (TG) in den Vorraum (22) und über den Zwischenraumzugang (46) in den Zwischenraum (24), während der Vorraum (22) mit dem Zwischenraum (24) über die Verbindungsleitung (48) fluidisch so verbunden ist, dass zwischen dem Vorraum (22) und dem Zwischenraum (24) ein Druckausgleich stattfindet, und Durchführen einer zweiten Integritätsprüfung.

2. Verfahren nach Anspruch 1, wobei das Testfluid ein Testgas ist und wobei das Verfahren vor dem Bestimmen des Integritätszustandes der Doppelfiltercapsule (10) ein Benetzen des ersten Filters (18) und/oder des zweiten Filters (20) mit einem Benetzungsmedium (BM) umfasst.

3. Verfahren nach Anspruch 1 oder 2, wobei die erste Integritätsprüfung und/oder die zweite Integritätsprüfung einen oder mehrere der folgenden Testprozesse umfasst:

- einen Bubble-Point-Test;
- einen Diffusionstest;
- einen Druckhaltetest.

4. Verfahren nach einem der vorangegangenen Ansprüche, wobei die erste Testphase in einem dynamischen Modus durchgeführt wird, in welchem die erste Integritätsprüfung innerhalb einer so kurzen Zeit nach einer Zufuhr des Testfluids in den Vorraum (22) oder nach einem Druckaufbau des Testfluids im Vorraum (22) erfolgt, dass diese Zeit wesentlich kürzer ist als das Verhältnis des kompressiblen Volumens im Zwischenraum (24) zu der Flussrate des Testfluids durch den ersten Filter (18) während der ersten Integritätsprüfung.

5. Verfahren nach einem der Ansprüche 1 bis 4, wobei die erste Testphase in einem stationären Modus durchgeführt wird, in welchem während der ersten Integritätsprüfung über den Vorraumzugang (44) kontinuierlich so viel Testfluid (TG) zugeführt wird, wie es durch den ersten Filter (18) und den zweiten Filter (20) hindurchtritt, um über den Ausgang (16) auszutreten.

6. Verfahren nach einem der vorangegangenen Ansprüche, wobei das Druckfluid dem Vorraum (22) und/oder dem Zwischenraum (24) über einen Sterilfilter zugeführt wird.

7. Verfahren nach einem der vorangegangenen Ansprüche, wobei der erste Filter (18) und der zweite Filter (20) als Filterkerzen mit

- einem im wesentlichen zylindermantelförmigen Kern (26);
- einer den Kern (26) umgebenden Filterstruktur (28) mit einer Filtermembran; und
- einer die Filterstruktur (28) und den Kern (26) umgebenen, im Wesentlichen zylindermantelförmigen Hülle,

derart im Gehäuse (12) angeordnet sind oder werden, dass bei einem Filtrationsvorgang das zu filtrierende Medium in dessen Flussrichtung die jeweilige Filtermembran des ersten (18) und zweiten Filters (20) im Wesentlichen radial von außen nach innen durchströmt.

8. Verfahren nach einem der vorangegangenen Ansprüche, wobei der erste (18) und/oder zweite Filter (20) eine Plissee-förmige Filterstruktur umfasst.

9. Verfahren nach einem der vorangegangenen Ansprüche, wobei der erste Filter (18) eine erste Filtermembran mit Poren und der zweite Filter (20) eine zweite Filtermembran mit Poren derart umfasst, dass eine Porengröße der ersten Filtermembran größer ist als eine Porengröße der zweiten Filtermembran.

10. Verfahren nach Anspruch 9, wobei

- die Porengröße der ersten Filtermembran einen Wert im Bereich von etwa 0,3 $\mu$m bis etwa 0,6 $\mu$m aufweist; und
- die Porengröße der zweiten Filtermembran einen Wert im Bereich von etwa 0,1 $\mu$m bis etwa 0,3 $\mu$m, insbesondere im Bereich von etwa 0,1 $\mu$m bis etwa 0,2 $\mu$m aufweist.

11. Verfahren nach einem der vorangegangenen Ansprüche, wobei der erste Filter (18) eine erste Filtermembran mit Poren und der zweite Filter (20) eine zweite Filtermembran mit Poren derart umfasst, dass eine Porengröße der ersten Filtermembran und eine Porengröße der zweiten Filtermembran einen Wert im Bereich von von etwa 0,05 $\mu$m bis etwa 0,4 $\mu$m, insbesondere im Bereich von etwa 0,1 $\mu$m bis etwa 0,2 $\mu$m aufweisen.

12. Verfahren nach einem der vorangegangenen Ansprüche, wobei die Doppelfiltercapsule (10) derart bereitgestellt wird, dass das Gehäuse (12) außerdem einen Eingang (14) zum Zuführen des zu filtrierenden Mediums (M) in den Vorraum (22) aufweist.

13. System zum Durchführen eines Integritätstests umfassend:

- eine Doppelfiltercapsule (10) mit einem Gehäuse (12), in welchem ein erster Filter (18) und ein zweiter Filter (20) in Flussrichtung eines zu filtrierenden Mediums (M) nacheinander derart angeordnet sind, dass bei einem Filtrationsvorgang das zu filtrierende Medium in dessen Flussrichtung von einem Vorraum (22) im Gehäuse (12) durch den ersten Filter (18) in einen Zwischenraum (24) zwischen dem ersten Filter (18) und dem zweiten Filter (20) und weiter durch den zweiten Filter (20) zu einem Ausgang (16) fließt, wobei das Gehäuse (12) einen Vorraumzugang (44) zum Zuführen eines Testfluids (TG) in den Vorraum (22) und einen Zwischenraumzugang (46) zum Zuführen des Testfluids (TG) in den Zwischenraum (24) aufweist;
- eine Verbindungsleitung (48) zwischen dem Vorraumzugang (44) und dem Zwischenraumzugang (46) zur fluidischen Verbindung zwischen dem Vorraum (22) und dem Zwischenraum (24), wobei zumindest die fluidische Verbindung zum Zwischenraum (24) hin verschließbar ist; und
- ein Integritätsprüfgerät, welche ausgelegt ist, die folgenden beiden Testphasen auszuführen und basierend darauf einen Integritätszustand der Doppelfiltercapsule (10) zu bestimmen:

-- eine erste Testphase, umfassend: Zuführen des Testfluides (TG) in den Vorraum (22) bei verschlossener fluidischer Verbindung der Verbindungsleitung (48) zum Zwischenraum (24) hin und Durchführen einer ersten Integritätsprüfung; und
-- eine zweite Testphase, umfassend: gleichzeitiges Zuführen des Testfluides (TG) in den Vorraum (22) und über den Zwischenraumzugang (46) in den Zwischenraum (24), während der Vorraum (22) mit dem Zwischenraum (24) über die Verbindungsleitung (48) fluidisch so verbunden ist, dass zwischen dem Vorraum (22) und dem Zwischenraum (24) ein Druckausgleich stattfindet, und Durchführen einer zweiten Integritätsprüfung.

**Claims**

1. Method for carrying out an integrity test on a double filter capsule (10), which method comprises:

- providing the double filter capsule (10), which has a housing (12) in which a first filter (18) and a second filter (20) are arranged one downstream of the other in a flow direction of a medium (M) to be filtered such that, during a filtration process, the medium (M) to be filtered flows in its flow direction from an upstream chamber (22) in the housing (12), through the first filter (18) into an intermediate chamber (24) between the first filter (18) and the second filter (20), and onward through the second filter (20) to an outlet (16), the housing (12) having an upstream-chamber access point (44) for feeding a test fluid (TG) into the upstream chamber (22) and an intermediate-chamber access point (46) for feeding the test fluid (TG) into the intermediate chamber (24);
- providing a connecting line (48) between the upstream-chamber access point (44) and the intermediate-chamber access point (46) for fluidic connection between the upstream chamber (22) and the intermediate chamber (24), at least the fluidic connection toward the intermediate chamber (24) being closable;
- determining the state of integrity of the double filter capsule (10) on the basis of at least the following two test phases:

    -- a first test phase, which comprises: feeding the test fluid (TG) into the upstream chamber (22) while the fluidic connection of the connecting line (48) toward the intermediate chamber (24) is closed, and carrying out a first integrity test; and

    -- a second test phase, which comprises: simultaneously feeding the test fluid (TG) into the upstream chamber (22) and via the intermediate-chamber access point (46) into the intermediate chamber (24) while the upstream chamber (22) is fluidically connected to the intermediate chamber (24) via the connecting line (48) such that pressure equalization takes place between the upstream chamber (22) and the intermediate chamber (24), and carrying out a second integrity test.

2. Method according to claim 1, wherein the test fluid is a test gas, and wherein the method comprises wetting the first filter (18) and/or the second filter (20) with a wetting medium (BM) prior to determining the state of integrity of the double filter capsule (10).

3. Method according to claim 1 or 2, wherein the first integrity test and/or the second integrity test comprises one or more of the following test processes:

    - a bubble point test;
    - a diffusion test;
    - a pressure holding test.

4. Method according to any one of the preceding claims, wherein the first test phase is carried out in a dynamic mode, in which the first integrity test takes place within such a short time after feeding the test fluid into the upstream chamber (22) or after building up the pressure of the test fluid in the upstream chamber (22) that this time is significantly shorter than the ratio of the compressible volume in the intermediate chamber (24) to the flow rate of the test fluid through the first filter (18) during the first integrity test.

5. Method according to any one of claims 1 to 4, wherein the first test phase is carried out in a stationary mode, in which, during the first integrity test, there is continuously fed in via the upstream-chamber access point (44) as much test fluid (TG) as passes through the first filter (18) and the second filter (20) to exit via the outlet (16).

6. Method according to any one of the preceding claims, wherein the pressurized fluid is fed to the upstream chamber (22) and/or the intermediate chamber (24) via a sterile filter.

7. Method according to any one of the preceding claims, wherein the first filter (18) and the second filter (20), as filter candles having

    - a substantially cylindrical core (26);
    - a filter structure (28) surrounding the core (26) and comprising a filter membrane; and
    - a substantially cylindrical shell surrounding the filter structure (28) and the core (26),

are or will be arranged in the housing (12) in such a way that, during a filtration process, the medium to be filtered flows in its flow direction through the respective filter membrane of the first (18) and second filter (20) substantially radially from the outside toward the inside.

8. Method according to any one of the preceding claims, wherein the first (18) and/or second filter (20) comprises a pleated filter structure.

9. Method according to any one of the preceding claims, wherein the first filter (18) comprises a first filter membrane having pores and the second filter (20) comprises a second filter membrane having pores, such that a pore size of the first filter membrane is larger than a pore size of the second filter membrane.

10. Method according to claim 9, wherein

    - the pore size of the first filter membrane has a value in the range from approximately 0.3 um to approximately 0.6 $\mu$m; and
    - the pore size of the second filter membrane has a value in the range from approximately 0.1 um to approximately 0.3 um, in particular in the range from approximately 0.1 um to approximately 0.2 $\mu$m.

11. Method according to any one of the preceding claims, wherein the first filter (18) comprises a first filter membrane having pores and the second filter (20) comprises a second filter membrane having pores, such that a pore size of the first filter membrane and a pore size of the second filter membrane have a value in the range from approximately 0.05 um to approximately 0.4 um, in particular in the range from approximately 0.1 um to approximately 0.2 $\mu$m.

12. Method according to any one of the preceding claims, wherein the double filter capsule (10) is provided such that the housing (12) additionally has an inlet (14) for feeding the medium (M) to be filtered into the upstream chamber (22).

13. System for carrying out an integrity test, which system comprises:

- a double filter capsule (10), which has a housing (12) in which a first filter (18) and a second filter (20) are arranged one downstream of the other in a flow direction of a medium (M) to be filtered such that, during a filtration process, the medium to be filtered flows in its flow direction from an upstream chamber (22) in the housing (12), through the first filter (18) into an intermediate chamber (24) between the first filter (18) and the second filter (20), and onward through the second filter (20) to an outlet (16), the housing (12) having an upstream-chamber access point (44) for feeding a test fluid (TG) into the upstream chamber (22) and an intermediate-chamber access point (46) for feeding the test fluid (TG) into the intermediate chamber (24);
- a connecting line (48) between the upstream-chamber access point (44) and the intermediate-chamber access point (46) for fluidic connection between the upstream chamber (22) and the intermediate chamber (24), at least the fluidic connection toward the intermediate chamber (24) being closable; and
- an integrity tester, which is designed to execute the following two test phases and, on the basis thereof, to determine a state of integrity of the double filter capsule (10):

-- a first test phase, which comprises: feeding the test fluid (TG) into the upstream chamber (22) while the fluidic connection of the connecting line (48) to the intermediate chamber (24) is closed, and carrying out a first integrity test; and
-- a second test phase, which comprises: simultaneously feeding the test fluid (TG) into the upstream chamber (22) and via the intermediate-chamber access point (46) into the intermediate chamber (24) while the upstream chamber (22) is fluidically connected to the intermediate chamber (24) via the connecting line (48) such that pressure equalization takes place between the upstream chamber (22) and the intermediate chamber (24), and carrying out a second integrity test.

**Revendications**

1. Procédé pour la mise en œuvre d'un test d'intégrité d'une capsule à double filtre (10), comprenant :

- la fourniture de la capsule à double filtre (10) avec un boîtier (12), dans lequel un premier filtre (18) et un deuxième filtre (20) sont disposés l'un derrière l'autre dans la direction d'écoulement d'un milieu à filtrer (M), de telle sorte que lors d'un processus de filtration le milieu à filtrer (M) s'écoule dans sa direction d'écoulement à partir d'une préchambre (22) dans le boîtier (12) à travers le premier filtre (18) dans un espace intermédiaire (24) entre le premier filtre (18) et le deuxième filtre (20) et continue de s'écouler à travers le deuxième filtre (20) vers une sortie (16), dans lequel le boîtier (12) présente un accès à la préchambre (44) pour amener un fluide de test (TG) dans la préchambre (22) et un accès à l'espace intermédiaire (46) pour amener le fluide de test (TG) dans l'espace intermédiaire (24) ;
- la fourniture d'une conduite de liaison (48) entre l'accès à la préchambre (44) et l'accès à l'espace intermédiaire (46) pour la liaison fluidique entre la préchambre (22) et l'espace intermédiaire (24), dans lequel au moins la liaison fluidique en direction de l'espace intermédiaire (24) peut être fermée ;
- la détermination de l'état d'intégrité de la capsule à double filtre (10) sur la base au moins des deux phases de test suivantes :

-- une première phase de test, comprenant : l'amenée du fluide de test (TG) dans la préchambre (22) lorsque la liaison fluidique de la conduite de liaison (48) en direction de l'espace intermédiaire (24) est fermée et la mise en œuvre d'un premier contrôle d'intégrité ; et
-- une deuxième phase de test, comprenant : l'amenée simultanée du fluide de test (TG) dans la préchambre (22) et par l'intermédiaire de l'accès à l'espace intermédiaire (46) dans l'espace intermédiaire (24), pendant que la préchambre (22) est reliée fluidiquement à l'espace intermédiaire (24) par l'intermédiaire de la conduite de liaison (48), de sorte qu'une compensation de pression a lieu entre la préchambre (22) et l'espace intermédiaire (24), et la mise en œuvre d'un deuxième contrôle d'intégrité.

2. Procédé selon la revendication 1, dans lequel le fluide de test est un gaz de test et dans lequel le procédé comprend avant la détermination de l'état d'intégrité de la capsule à double filtre (10) un mouillage du premier filtre (18) et/ou du deuxième filtre (20) avec un milieu de mouillage (BM).

3. Procédé selon la revendication 1 ou 2, dans lequel le premier contrôle d'intégrité et/ou le deuxième contrôle d'intégrité comprend un ou plusieurs des processus de test suivants :

   - un test de point de bulle ;
   - un test de diffusion ;
   - un test de maintien de pression.

4. Procédé selon l'une quelconque des revendications précédentes, dans lequel la première phase de test est mise en œuvre dans un mode dynamique, dans lequel le premier contrôle d'intégrité s'effectue pendant un temps si court après une amenée du fluide de test dans la préchambre (22) ou après une montée en pression du fluide de test dans la préchambre (22) que ce temps est sensiblement plus court que le rapport du volume compressible dans l'espace intermédiaire (24) par rapport au débit du fluide de test à travers le premier filtre (18) pendant le premier contrôle d'intégrité.

5. Procédé selon l'une quelconque des revendications 1 à 4, dans lequel la première phase de test est mise en œuvre dans un mode stationnaire, dans lequel pendant le premier contrôle d'intégrité une quantité de fluide de test (TG) égale à celle qui traverse le premier filtre (18) et le deuxième filtre (20) pour sortir par la sortie (16) est amenée en continu par l'intermédiaire de l'accès à la préchambre (44).

6. Procédé selon l'une quelconque des revendications précédentes, dans lequel le fluide sous pression est amené à la préchambre (22) et/ou l'espace intermédiaire (24) par l'intermédiaire d'un filtre stérile.

7. Procédé selon l'une quelconque des revendications précédentes, dans lequel le premier filtre (18) et le deuxième filtre (20) en tant que bougies filtrantes comprenant

   - une partie centrale (26) sensiblement en forme d'enveloppe cylindrique ;
   - une structure de filtre (28) entourant la partie centrale (26) avec une membrane filtrante ;
   Et
   - une gaine sensiblement en forme d'enveloppe cylindrique entourant la structure filtrante (28) et la partie centrale (26),

   sont ou sont prévus d'être disposés dans le boîtier (12), de telle sorte que lors d'un processus de filtration le milieu à filtrer s'écoule dans sa direction d'écoulement à travers la membrane filtrante respective du premier (18) et deuxième filtre (20) sensiblement radialement de l'extérieur vers l'intérieur.

8. Procédé selon l'une quelconque des revendications précédentes, dans lequel le premier filtre (18) et/ou deuxième filtre (20) comprend une structure filtrante en forme de plissé.

9. Procédé selon l'une quelconque des revendications précédentes, dans lequel le premier filtre (18) comprend une première membrane filtrante avec des pores et le deuxième filtre (20) une deuxième membrane filtrante avec des pores, de telle sorte qu'une taille de pore de la première membrane filtrante est supérieure à une taille de pore de la deuxième membrane filtrante.

10. Procédé selon la revendication 9, dans lequel

    - la taille de pore de la première membrane filtrante présente une valeur dans la plage d'environ 0,3 $\mu$m à environ 0,6 $\mu$m ; et
    - la taille de pore de la deuxième membrane filtrante présente une valeur dans la plage d'environ 0,1 $\mu$m à environ 0,3 $\mu$m, en particulier dans la plage d'environ 0,1 $\mu$m à environ 0,2 $\mu$m.

**11.** Procédé selon l'une quelconque des revendications précédentes, dans lequel le premier filtre (18) comprend une première membrane filtrante avec des pores et le deuxième filtre (20) une deuxième membrane filtrante avec des pores, de telle sorte qu'une taille de pore de la première membrane filtrante et une taille de pore de la deuxième membrane filtrante présentent une valeur dans la plage d'environ 0,05 $\mu$m à environ 0,4 $\mu$m, en particulier dans la plage d'environ 0,1 $\mu$m à environ 0,2 $\mu$m.

**12.** Procédé selon l'une quelconque des revendications précédentes, dans lequel la capsule à double filtre (10) est fournie de telle sorte que le boîtier (12) présente en outre une entrée (14) pour amener le milieu à filtrer (M) dans la préchambre (22).

**13.** Système pour la mise en œuvre d'un test d'intégrité comprenant :

- une capsule à double filtre (10) avec un boîtier (12), dans lequel un premier filtre (18) et un deuxième filtre (20) sont disposés l'un derrière l'autre dans la direction d'écoulement d'un milieu à filtrer (M), de telle sorte que lors d'un processus de filtration le milieu à filtrer s'écoule dans sa direction d'écoulement à partir d'une préchambre (22) dans le boîtier (12) à travers le premier filtre (18) dans un espace intermédiaire (24) entre le premier filtre (18) et le deuxième filtre (20) et continue de s'écouler à travers le deuxième filtre (20) vers une sortie (16), dans lequel le boîtier (12) présente un accès à la préchambre (44) pour amener un fluide de test (TG) dans la préchambre (22) et un accès à l'espace intermédiaire (46) pour amener le fluide de test (TG) dans l'espace intermédiaire (24) ;
- une conduite de liaison (48) entre l'accès à la préchambre (44) et l'accès à l'espace intermédiaire (46) pour la liaison fluidique entre la préchambre (22) et l'espace intermédiaire (24), dans lequel au moins la liaison fluidique en direction de l'espace intermédiaire (24) peut être fermée ; et
- un appareil de contrôle d'intégrité, lequel est conçu pour réaliser les deux phases de test suivantes et pour déterminer sur la base de celles-ci un état d'intégrité de la capsule à double filtre (10) :

-- une première phase de test, comprenant : l'amenée du fluide de test (TG) dans la préchambre (22) lorsque la liaison fluidique de la conduite de liaison (48) en direction de l'espace intermédiaire (24) est fermée et la mise en œuvre d'un premier contrôle d'intégrité ; et
-- une deuxième phase de test, comprenant : l'amenée simultanée du fluide de test (TG) dans la préchambre (22) et dans l'espace intermédiaire (24) par l'intermédiaire de l'accès à l'espace intermédiaire (46), pendant que la préchambre (22) est reliée fluidiquement à l'espace intermédiaire (24) par l'intermédiaire de la conduite de liaison (48), de sorte qu'une compensation de pression a lieu entre la préchambre (22) et l'espace intermédiaire (24), et la mise en œuvre d'un deuxième contrôle d'intégrité.

FIG 1

FIG 2A

FIG 2B

FIG 3

FIG 4A

BM

14

44

10

48

46

BM

FIG 4B

14

44

10

TG

48

46

FIG 4C

14

44

10

48

TG

46

FIG 4D

M

14

44

10

48

M''

46

FIG 4E

14

44

10

48

46

FIG 5

**EP 4 019 935 B1**

**IN DER BESCHREIBUNG AUFGEFÜHRTE DOKUMENTE**

**In der Beschreibung aufgeführte Patentdokumente**

- US 2007079649 A1
- US 2015316462 A1